Europäisches Patentamt

European Patent Office

Office européen des brevets

(11) Publication number: **0 099 404**
**B1**

# EUROPEAN PATENT SPECIFICATION

(45) Date of publication of patent specification: **31.10.90**

(51) Int. Cl.⁵: **G 06 F 7/04**

(21) Application number: **83900818.2**

(22) Date of filing: **12.01.83**

(86) International application number:
**PCT/US83/00046**

(87) International publication number:
**WO 83/02675 04.08.83 Gazette 83/18**

(60) Divisional application 88200935 filed on 11.05.88.

(54) **TEXT COMPARATOR.**

(30) Priority: **25.01.82 US 342620**

(43) Date of publication of application:
**01.02.84 Bulletin 84/05**

(45) Publication of the grant of the patent:
**31.10.90 Bulletin 90/44**

(84) Designated Contracting States:
**BE CH DE FR GB LI NL SE**

(56) References cited:
**US-A-4 152 762**
**US-A-4 242 735**
**US-E-26 919**

(73) Proprietor: **SKINNER, James T. Jr.**
**780 Yale Road**
**Boulder, CO 80303 (US)**

(72) Inventor: **SKINNER, James T. Jr.**
**780 Yale Road**
**Boulder, CO 80303 (US)**

(74) Representative: **Noz, Franciscus Xaverius, Ir.**
**et al**
**Algemeen Octrooibureau P.O. Box 645**
**NL-5600 AP Eindhoven (NL)**

Courier Press, Leamington Spa, England.

# EP 0 099 404 B1

**Description**

Field of the invention
This invention relates to a structure and method for searching computer data bases in order to locate and retrieve textual information.

Description of the prior art
Prior art text comparators for searching a computer data base are known. Structures for carrying out such techniques (such structures are herein called "textual comparison systems") are used, for example, by Lockheed Dialog Information Retrieval Service, the United States Government "Flite" service, "Lexis", and others.

Such prior art textual comparison systems are software oriented in that a portion of the information stored in the computer (called a "data base") must be loaded into the computer working memory from a mass memory storage device (typically a magnetic disk). The portion of the data base within the working memory of the computer is scanned by the computer, as controlled by software instructions, in order to determine if any portion of the data base stored in the computer working memory matches the desired text. Typically the textual material comprising the data base is stored by using a set of standard data base characters such as the well-known and commonly used American National Standard Code for Information Interchange ("ASCII"). The ASCII characters and their binary and hexidecimal representations are shown in Table 1. Thus, such prior art software-oriented text comparators are rather slow in that the computer must control the transfer of sequential portions of the data base from a large storage media, such as a disk, to the computer memory, and the computer must then utilize an iterative process in order to determine whether the desired text is contained within that portion of the data base which has been transferred to the computer memory. Because the computer itself is performing the search, such prior art searching techniques are rather slow, and consequently expensive due to the large amount of computer time required to perform a search.

Another prior art comparator system is described in United States Patent No. 4,152,762 issued May 1, 1979 to Bird et al. Bird et al describe a method and structure for text comparison which is rather complex and requires each desired textual word or phrase to be stored in octal format in one of a plurality of "key memories". In addition, the Bird structure requires the use of additional memories, including a "pointer memory" and a "hash memory", as well as a wide variety of other subcircuits. Thus, the Bird structure is rather complex.

U.S. Patent No. Re. 26,919, reissued June 23, 1970 on original U.S. Patent No. 3,242,470, discloses a time-shared information retrieval system. In No. Re. 26,919 Hagelbarger et al. disclose a digital buffer store for receiving characters and a decoder for decoding the characters. This system requires a particular format for the information to be recorded on the main file. This system also does not have the text comparison capabilities needed, including the ability to handle predefined delimiter characters.

The matter of the pre-characterizing portion of claim 1 is deemed known from said U.S. Re. 26,919.

Summary
The present invention attacks the problem of text comparison for the purpose of retrieving textual information from a large data base system from a different point of view.

The invention aims to provide in an improvement over the system deemed known from U.S. Re. 26,919 by the features of the characterizing portion of claim 1. Further features of the invention are the subject of Claims 2—11.

An embodiment of a text comparator constructed in accordance with this invention as claimed receives data stored in a mass storage device. This embodiment includes word logic, delimiter logic, set logic, set combination logic, proximity logic, and programming logic. The delimiter logic serves to monitor the characters transferred from mass storage device and provides discrete signals depicting whether the character being transferred is a predefined delimiter character. The word logic serves to store data regarding predefined words (i.e., strings of characters) which are to be located and provides output signals indicating when such predefined words have been located. The set logic receives the delimiter signals and word signals and provides output signals when selected words are located in the same sentence, same paragraph, etc., as desired. The set combination logic serves to combine the signals from the set logic in order to generate output signals in response to more complex search strategies than can be easily detected by the set logic. The proximity logic provides output signals indicating when predefined words detected by word logic 112, or predefined set of words, as detected by set logic 114, or a combination of this information, occurs within a predefined proximity. For example, proximity logic 117 will determine if a first selected word occurs within N (where N is a selected integer) words of a second preselected word. The programming logic serves to receive search strategy instructions from the user and in response thereto provide the proper timing, addressing, and data signals to the word logic, delimiter logic, set logic, set combination logic, and proximity logic to cause to be stored within these elements the information required to perform the desired search strategy.

# EP 0 099 404 B1

Brief description of the drawings

Fig. 1 is a block diagram of a textual comparator construction in accordance with a second embodiment of this invention;

Fig. 2 is a diagram depicting the relationship between Figs. 2a, 2b and 2c which form a schematic diagram of the delimiter logic 113 shown in Fig. 1;

Fig. 3 is a diagram depicting the relationship between Figs. 3a—3d which in turn form a schematic diagram of the set logic 114 depicted in Fig. 1;

Fig. 4 is a diagram which depicts the relationship between Figs. 4a and 4b which in turn form a schematic diagram of the set combination logic 115 depicted in Fig. 1;

Fig. 5 is a diagram depicting the relationship between Figs. 5a—5d which in turn form a schematic diagram of the word logic 112 shown in Fig. 1; and

Fig. 6 is a diagram depicting the relationship between Figs. 6a—6c which in turn form a schematic diagram of the proximity logic 117 shown in Fig. 1.

Detailed description

Embodiment

System overview

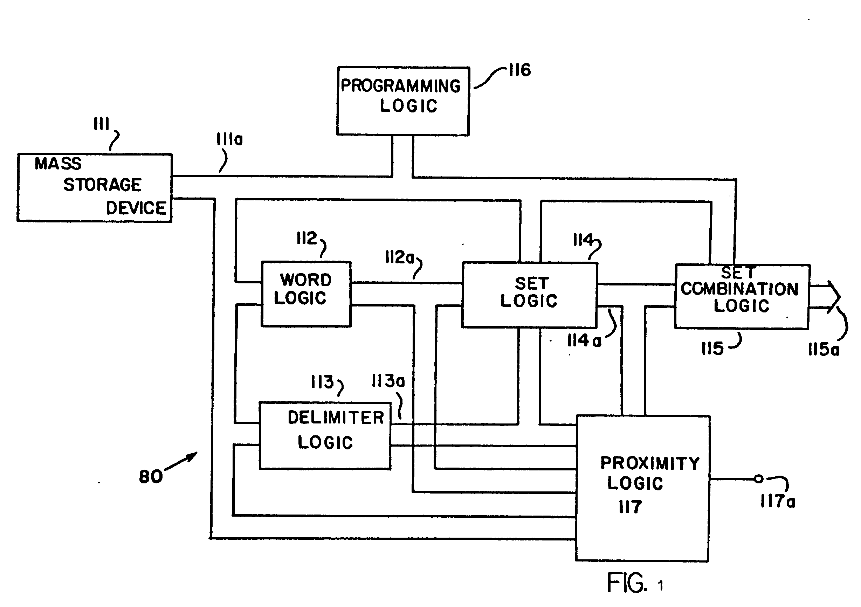

A second embodiment of a text comparator constructed in accordance with this invention is depicted in the block diagram of Fig. 1. Text comparator 80 includes mass storage device 111 which, as previously described in conjunction with the first embodiment of this invention, stores a large amount of textual data, often referred to as the "data base". Data stored in mass storage device 111 is transferred via bus 111a and made available to word logic 112, delimiter logic 113, set logic 114, set combination logic 115, proximity logic 117, and programming logic 116, as is fully described below. Delimiter logic 113 serves to monitor the characters transferred from mass storage device 111 on bus 111a and provides discrete signals depicting whether the character being transferred is a predefined delimiter character. Such delimiter characters include, for example, special characters or groups of characters denoting the end of a word (EOW), end of a paragraph (EOP), end of a sentence (EOS), end of a document (EOD), end of a chapter (EOC), and the end of a title (EOT). The delimiter signals provided by delimiter logic 113 are required in order to allow the text comparator 80 to determine, for example, when two specified words occur within the same sentence or within the same paragraph, as is fully described below.

Word logic 112 serves to store data regarding predefined words (i.e., strings of characters) which are to be located within the text stored in mass storage device 111. Word logic 112 then provides output word signals on bus 112a indicating when such predefined words have been located in the character string being transferred from mass storage device 111 via bus 111a. These word signals are transferred via bus 112a to set logic 114 and proximity logic 117.

Set logic 114 receives the delimiter signals from delimiter logic 113 via bus 113a and word signals from word logic 112 via bus 112a and determines when selected words are located in the same sentence, same paragraph, etc. as desired, and provides output signals on bus 114a indicating when predefined words or strings of characters have been so located.

The output signals from set logic 114 are applied to set combination logic 115, which serves to combine the signals from set logic 114 in order to generate output signals on output bus 115a indicating when the textual information transferred from mass storage device 111 on bus 111a meets the desired search strategy selected by the user.

Proximity logic 117 receives input signals from buses 111a, 112a, 113a, and 114a and combines this information in order to provide output signals indicating when predefined words detected by word logic 112, or predefined set of words, as detected by set logic 114, or a combination of this information, occurs within a predefined proximity. For example, proximity logic 117 will determine if a first selected word occurs within N (where N is a selected integer) words of a second preselected word.

Programming logic 116 serves to receive search strategy instructions from the user and in response thereto provide the proper timing, addressing, and data signals via bus 111a to word logic 112, delimiter logic 113, set logic 114, set combination logic 115, and proximity logic 117 to cause to be stored within these elements the information required to perform the desired search strategy.

While for ease and understanding word logic 112, delimiter logic 113, set logic 114, set combination logic 115, and proximity logic 117 will now be described in separate subsections of this specification, it is to be understood that each of these elements is, if required, programmed by programming logic 116 prior to the execution of a user defined textual search strategy.

Delimiter Logic 113

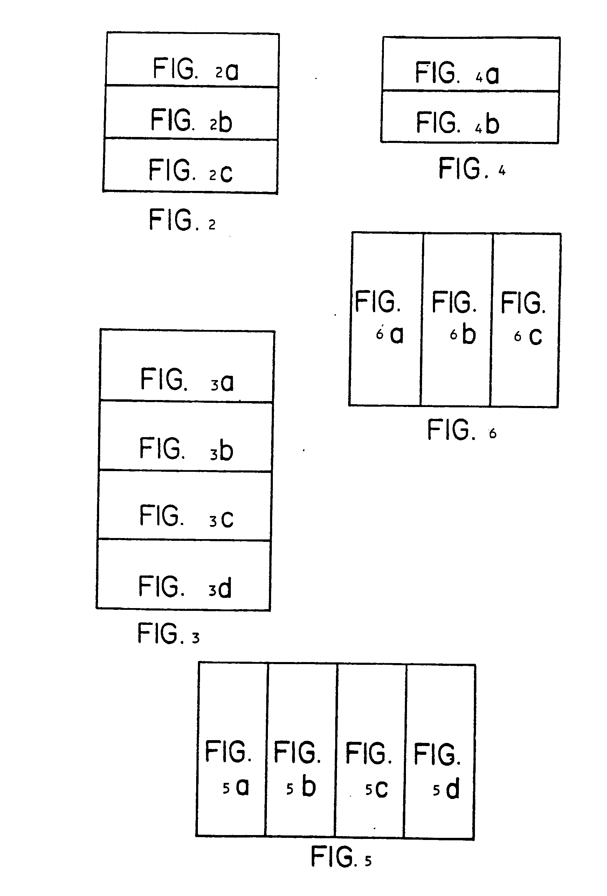

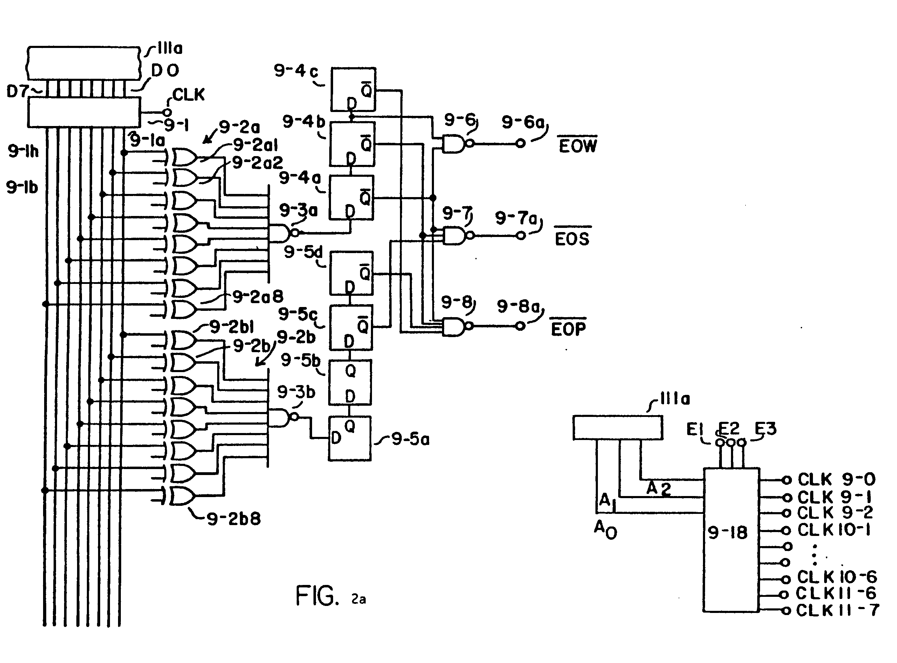

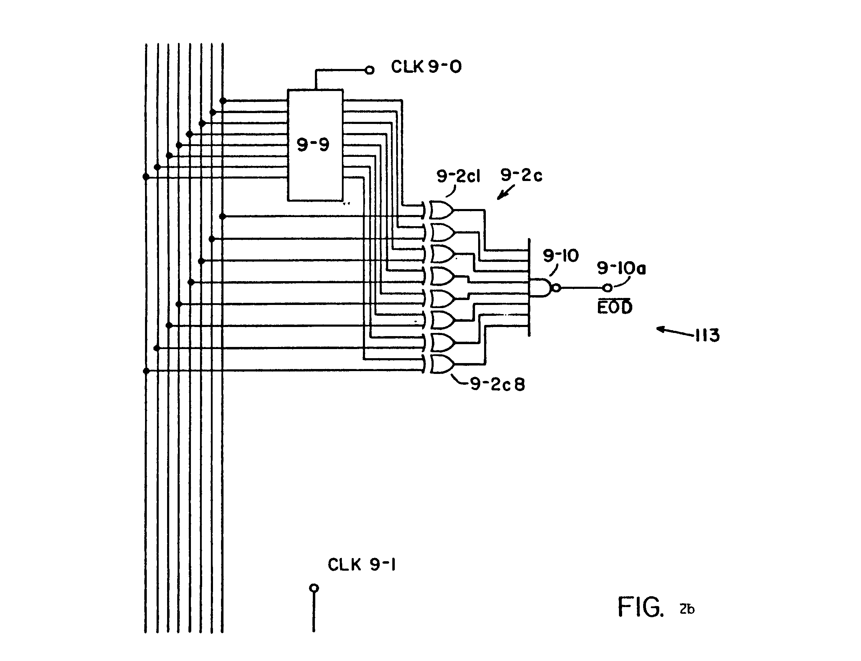

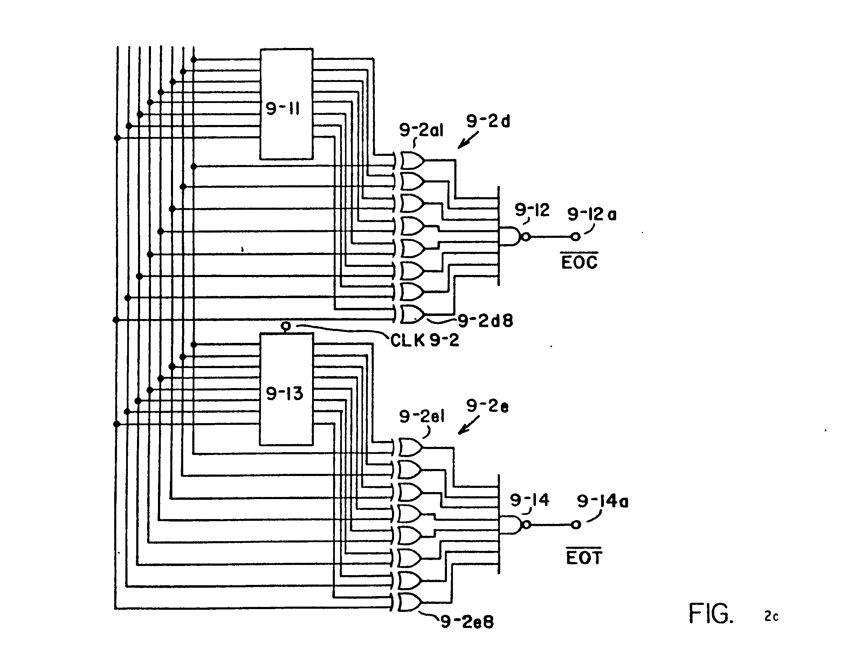

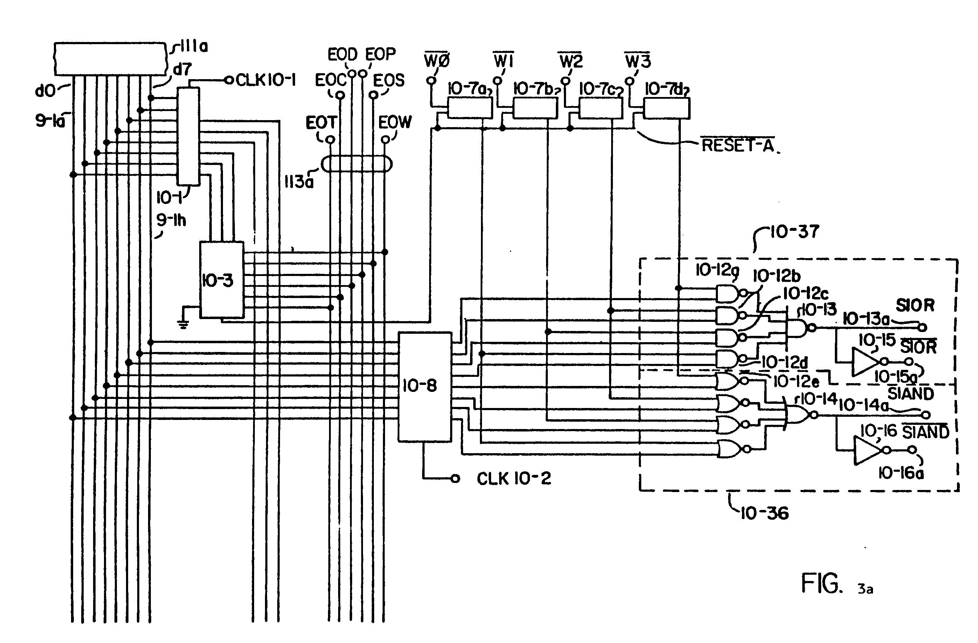

Fig. 2 depicts the relationship between Figs. 2a through 2c which in turn form a schematic diagram of one embodiment of delimiter logic 113. Delimiter logic 113 provides on its output leads 9-6a, 9-7a, 9-8a, 9-10a, 9-12a, and 9-14a, delimiter signals indicating, for example, the end of a word, end of a paragraph, end of a document, etc. These output leads 9-6a, 9-7a, 9-8a, 9-10a, 9-12a and 9-14a form bus 113a of Fig. 1.

In many textual data base, the end of a word (EOW) is indicated by a non-blank character followed by a blank. This is preferred over the technique used by some textual data bases where the end of a word is indicated simply by a blank character, because at the end of a sentence and at the end of a paragraph

3

numerous blanks may occur in sequence, providing a corresponding plurality of undesired end of word signals. Similarly, an end of a sentence is often indicated by a period followed by two blanks, and an end of paragraph is indicated by a period followed by three blanks.

The portion of the delimiter logic 113 shown in Fig. 2a serves to detect the occurrence of a blank, a non-blank character, and a period, and also combines these three characters in order to provide $\overline{EOW}$, $\overline{EOS}$ and $\overline{EOP}$ signals on output leads 9-6a through 9-8a, respectively. The eight bit data word comprising bits D0 through D7 is latched into latch 9-1 upon receipt of a clock signal (CLK) which is provided by mass storage device 111 on bus 111a to indicate that a valid data word is present on bus 111a. Latch 9-1 comprises, for example, a 74373 device manfuactured by National Semiconductor Corporation (hereinafter referred to as "National"). Latch 9-1 serves to store data received on bus 111a and provide this data to the remainder of delimiter logic 113 until the next data word has been set onto bus 111a. Thus latch 9-1 provides bits D0 through D7 on leads 9-1a through 9-1h. Each bit D0 through D7 is uniquely applied to one input lead of exclusive OR gates 9-2a1 through 9-2a8, and are also uniquely applied to one input lead of exclusive OR gates 9-2b1 through 9-2b8. The remaining input leads of exclusive OR gates 9-2a1 through 9-2a8 are connected either to a logical zero signal (typically zero volts) or a logical one signal (typically 5 volts) in order to program exclusive OR gates 9-2a1 through 9-2a8 so as to detect when a blank character is transmitted on bus 111a. Similarly, the remaining input leads of exclusive OR gates 9-2b1 through 9-2b8 are connected either to a logical zero signal or a logical one signal in order to program exclusive OR gates 9-2b1 through 9-2b8 so as to detect when a period is transmitted on bus 111a.

Referring to Table 1, it is seen that in ASCII, a blank is a hexadecimal 20 (binary 00100000). Accordingly, the program leads of exclusive OR gates 9-2a1 through 9-2a8 (i.e., those leads not connected to data bits D0 through D7 provided by leads 9-1a through 9-1h, respectively) are programmed to the binary signal corresponding to the inverse of the binary signal representing a blank. Thus, the program leads of exclusive OR gates 9-2a1 through 9-2a8 are programmed to binary 11011111, respectively. In this manner, when a blank signal is transmitted on bus 111a and stored in latch 9-1, the D0 through D7 signals applied to each exclusive OR gate 9-2a1 through 9-2a8 are opposite the program signal applied to these exclusive OR gates, and each exclusive OR gate 9-2a1 through 9-2a8 provides a logical one output signal on its output lead.

The output signals from exclusive OR gates 9-2a1 through 9-2a8 are applied to the input leads of NAND gate 9-3a. Thus, when a blank character is transmitted on bus 111a, each input signal to NAND gate 9-3a is a logical one, and the $\overline{blank}$ output signal from NAND gate 9-3a is a logical zero, indicating that a blank character has been transmitted.

Conversely, when a nonblank character is transmitted on bus 111a and stored in latch 9-1, at least one exclusive OR gate 9-2a1 through 9-2a8 receives a data signal D0 through D7 which is identical to the programming signal applied to that exclusive OR gate, and the output signal from that exclusive OR gate is a logical zero. Thus, the $\overline{blank}$ output signal from NAND gate 9-31 is a logical one, indicating that a nonblank character has been transmitted.

The output signal from NAND gate 9-3a is applied to the D input lead of D type flip-flop 9-4a. The Q output lead of flip-flop 9-4a is connected to the D input lead of D-type flip-flop 9-4b, whose Q output lead is in turn connected to the D input lead of D-type flip-flop 9-4c. Flip-flops 9-5a through 9-5d thereby providing signals indicating whether each of the last three characters transmitted was a blank or a nonblank character. D-type flip-flops 9-4a through 9-4c comprise, for example, one flip-flop of a 74175 quad D-type flip-flop manufactured by National. Flip flops 9-4a through 9-4c each receive their clock signals from the Valid Data signal provided by mass storage device 111 (Fig. 1) indicating that valid data is available on bus 111a.

Again referring to Table 1, it is seen that in ASCII, a period is a hexadecimal 2E (binary 00101110). Accordingly, the program leads of exclusive OR gates 9-2b1 through 9-2b8 (i.e., those leads not connected to data bits D0 through D7 provided by leads 9-1a through 9-1h, respectively) are programmed to the binary signal corresponding to the inverse of the binary signal representing a period. Thus, the program leads of exclusive OR gates 9-2b1 through 9-2b8 are programmed to binary 11010001, respectively. In this manner, when a period signal is transmitted on bus 111a and stored in latch 9-1, the D0 through D7 signals applied to each exclusive OR gate 9-2b1 through 9-2b8 are opposite the program signal applied to these exclusive OR gates, and each exclusive OR gate 9-2b1 through 9-2b8 provides a logical one output signal on its output lead.

The output signals from exclusive OR gates 9-2b1 through 9-2b8 are applied to the input leads of NAND gate 9-3b. Thus, when a blank character is transmitted on bus 111a, each input signal to NAND gate 9-3b is a logical one, and the $\overline{\cdot}$ output signal from NAND gate 9-3b is a logical zero, indicating that the period has been transmitted.

Conversely, when a nonperiod character is transmitted on bus 111a and stored in latch 9-1, at least one exclusive OR gate 9-2b1 through 9-2b8 receives a data siganl D0 through D7 which is identical to the programming signal applied to that exclusive OR gate, and the output signal from that exclusive OR gate is a logical zero. Thus, the $\overline{\cdot}$ output signal from NAND gate 9-3b is a logical one, indicating that a non-period character has been transmitted.

The output signal from NAND gate 9-3b is applied to the D input lead of D type flip-flop 9-5a. The Q output lead of flip-flop 9-5a is connected to the D input lead of D-type flip-flop 9-5b, whose Q output lead is

EP 0 099 404 B1

in turn connected to the D input lead of D-type flip-flop 9-5c, whose Q output lead is in turn connected to the D input lead of D-type flip-flop 9-5d, flip-flops 9-5a through 9-5d, D-type flip-flops 9-5a through 9-5d comprise, for example, one flip-flop of a 74175 quad D-type flip-flop manufactured by National. Flip-flops 9-5a through 9-5d, each receive their clock signals from the Valid Data signal provided by mass storage device 111 (Fig. 1) indicating that valid data is available on bus 111a.

Because the end of a word is indicated by a nonblank character followed by a blank character, one input lead of NAND gate 9-6 is connected to the Q output lead of flip-flop 9-4b and one input lead of NAND gate 9-6 is connected to the $\bar{Q}$ output lead of flip-flop 9-4a. Thus, when the character most recently transmitted on bus 111a is a blank, the $\bar{Q}$ output signal from flip-flop 9-4a is a logical one. Similarly, when the preceding character transmitted on bus 111a is a nonblank character, the Q output signal from flip-flop 9-4b is a logical one. With both input leads of NAND gate 9-6 receiving logical one signals, the $\overline{EOW}$ output signal generated by NAND gate 9-6 and available on output lead 9-6a is a logical zero, indicating that the end of a word has been detected. At all other times, either the $\bar{Q}$ output lead of flip flop 9-4a will provide a logical zero signal (indicating that the character most recently transmitted on bus 111a is a nonblank character) or the Q output lead from flip flop 9-4b will provide a logical zero signal, indicating that the previously received character was not a nonblank character, or both, thereby causing NAND gate 9-6 to generate a logical one $\overline{EOW}$ signal.

Similarly, because the end of a sentence is indicated by a period followed by two blanks, NAND gate 9-7, which generates a $\overline{EOS}$ signal on its output lead 9-7a, has one of its three input leads connected to each of the Q output leads of flip-flops 9-4a, 9-4b, and 9-5c. In this manner, when the two most recently received characters are blanks, flip-flops 9-4a and 9-4b provide logical one $\bar{Q}$ output signals, and when the character preceding these two blank characters is a period, flip-flop 9-5c provides a logical one $\bar{Q}$ output signal, thereby causing NAND gate 9-7 to generate a logical zero $\overline{EOS}$ signal on output lead 9-7a.

In a similar manner, the end of a paragraph is indicated by a period followed by three blanks. Thus, NAND gate 9-8 has one of its input leads connected to each of the $\bar{Q}$ output leads of flip-flops 9-4a, 9-4b, 9-4c, and 9-5d. In this manner, when the three most recently received characters are all blanks, flip flops 9-4a through 9-4c will provide logical one $\bar{Q}$ output signals to three input leads of NAND gate 9-8. When the character preceding these three blanks is a period, flip flop 9-5d will provide a logical one $\bar{Q}$ output signal to the remaining input lead of NAND gate 9-8, thereby causing NAND gate 9-8 to generate a logical zero $\overline{EOP}$ signal on output lead 9-8a. Conversely, when the four characters most recently transmitted on bus 111a are not a period followed by three blanks, at least one $\bar{Q}$ output signal from flip-flops 9-4a, 9-4b, 9-4c, and 9-5b will be a logical zero, thereby causing NAND gate 9-8 to generate a logical one $\overline{EOP}$ signal on output lead 9-8a indicating that the end of a paragraph has not been detected.

Because the EOW, EOS and EOP signals are rather universally indicated by a non-blank character followed by a blank, a period followed by two blanks, and by a period followed by three blanks, respectively, it is preferable to utilize arrays of exclusive OR gates 9-2a and 9-2b, each exclusive OR gate having a programming lead hard wired to a logical zero or logical one potential, in order to detect the end of a word, end of a sentence, and end of a paragraph. However, the EOD, EOC, and EOT signals oftentimes stored within mass memory device 111 utilizing a variety of special characters, depending on the database used. For example, one system might store an EOD signal in mass memory device 111 as a hexadecimal FF, while another system might store an EOD signal in mass storage device 111 as a hexadecimal FA. Accordingly, it is desirable to provide delimiter logic 113 with the ability to be programmed in a manner that will allow delimiter logic 113 to detect the presence of the EOD, EOC and EOT signals, regardless of how those signals are stored in the mass storage device 111 of the particular system being used.

The remainder of the delimiter logic 113 shown in Fig. 2 is capable of being programmed to detect any three desired characters stored within mass storage device 111. In this embodiment, these three characters detected by the circuit of Fig. 2 are the characters which are used to indicate the end of a document (EOD), the end of a chapter (EOC) and the end of a title (EOT). The programming of delimiter logic 113 occurs prior to the transfer of data from mass storage device 111 to bus 111a for comparison. Prior to such transfer, programming logic 116 (Fig. 1) provides signals on bus 111a which serves to pre-program delimiter logic 113 as to the characters stored in mass storage device 111 which serve as the EOD, EOC and EOT delimiters. For example, programming logic 116 will first cause latch 9-9 (which comprises, for example a 74374 device manufactured by National) to store the inverse of the binary signal corresponding to the EOD delimiter character stored in mass storage device 111. Thus, for example, if the EOD delimiter characters stored in mass storage device 111 is a hexadecimal FF (binary 11111111) its inverse (binary 00000000) is stored in latch 9-9. This storage is performed by programming logic 116 providing on bus 111a data bits D0 through D7 equal to 00000000 and a suitable clock signal CLK to cause this data to be stored in latch 9-1. Programming logic 116 also provides an address signal of 000 on address leads A0 through A2, respectively, of bus 111a. The address signal 000 is applied to the address input leads of decoder 9-18 (which comprises, for example, a 74138 manufactured by National). Programming logic 116 also provides appropriate chip enable signals E1 through E3 to decoder 9-18, thereby enabling decoder 9-18. In response to these input signals, decoder 9-18 provides a positive going clock signal CLK 9-0 which is applied to latch 9-9. This positive going clock signal CLK 9-0 causes the data present on leads 9-1a through 9-1h (i.e., the data stored in latch 9-1 by programming logic 116) to be stored within latch 9-9. This data is stored in latch 9-9 until programming logic 116 stores another eight bit word in latch 9-9. Generally, because a given data

5

base will not change the delimiter character such as EOD, this data need be loaded into latch 9-9 only once upon installation of the equipment. However, in order to insure reliable operation of the delimiter logic 113, it may be desirable to periodically reload latch 9-9 with a binary 00000000 in order to insure that the proper data is stored in latch 9-9 despite any incipient failures which would cause the data stored within latch 9-9 to deviate from its intended value.

During the operation of the text comparator, character data is transferred from mass storage device 111 (Fig. 1) to bus 111a and, in addition to being compared by exclusive OR gate arrays 9-2a and 9-2b, is simultaneously compared with the data stored in latch 9-9 by exclusive OR gate array 9-2c to determine whether an EOD character has been transmitted on bus 111a. Thus, when an EOD character (hex FF) is transmitted on bus 111a, a logical one signal will be applied to one input lead of each exclusive OR gate 9-2c1 through 9-2c8 of exclusive OR gate array 9-2c. The data stored within latch 9-9 is continuously applied to the other input leads of exclusive OR gates 9-2c1 through 9-2c8. Thus, when an EOD character is transmitted on bus 111a, the data signals D0 through D7 applied to one input lead of exclusive OR gates 9-2c1 through 9-2c8 will be the inverse of the data which is applied by latch 9-9 to the other input lead of exclusive OR gates 9-2c1 through 9-2c8, thereby causing each exclusive OR gate 9-2c1 through 9-2c8 to provide a logical one signal on its output lead. These output signals are in turn applied to the input leads of NAND gate 9-10, thus causing NAND gate 9-10 to provide a logical zero $\overline{EOD}$ signal on output lead 9-10a, indicating that an EOD character is present on bus 111a. Conversely, if a character other than an EOD character is transferred on bus 111a, at least one exclusive OR gate 9-2c1 through 9-2c8 receives a data signal D0 through D7 which is identical to the data which that exclusive OR gate receives from latch 9-9, and the output signal from that exclusive OR gate is a logical zero, thus causing the $\overline{EOD}$ signal from NAND gate 9-10 to be a logical one, indicating that an EOD character has not been transferred on bus 111a.

In a similar manner, latch 9-11, exclusive OR array 9-2d, and NAND gate 9-12 provide an $\overline{EOC}$ signal on terminal 9-12a which indicates whether an end of chapter (EOC) character has been transferred on bus 111a. Thus, for example, if an EOC character is hexadecimal FE (binary 11111110), prior to the textual comparison process, programming logic 116 provides a data signal D7 through D0 equal to 00000001, and causes this signal to be stored in latch 9-11 by providing an A2 through A0 address signal of 001 which, together with appropriate enabling signals E1 through E3, in turn is applied to decoder 9-18, which in turn provides a positive going CLK 9-1 signal which is applied to latch 9-11. In this manner, when textual data is transferred from mass storage device 111 (Fig. 1) to bus 111a, each textual character is compared by exclusive OR gate array 9-2d with the data stored in latch 9-11, and an $\overline{EOC}$ signal is made available on output terminal 9-12a indicating whether an EOC character has been transmitted on bus 111a.

In a similar manner, latch 9-13, exclusive OR array 9-2e, and NAND gate 9-14 provide an $\overline{EOT}$ signal on terminal 9-14a which indicates whether an end of chapter (EOT) character has been transferred on bus 111a. Thus, for example, if an EOT character is hexadecimal FD (binary 11111101), prior to the textual comparison process, programming logic 116 provides a data signal D7 through D0 equal to 00000010, and causes this signal to be stored in latch 9-13 by providing an A2 through A0 address signal of 010 which, together with appropriate enabling signals E1 through E3, in turn is applied to decoder 9-18, which in turn provides a positive going CLK 9-2 signal which is applied to latch 9-13. In this manner, when textual data is transferred from mass storage device 111 (Fig. 1) to bus 111a, each textual character is compared by exclusive OR gate array 9-2e and and EOT signal is made available on output terminal 9-14a indicating whether an EOT character has been transmitted on bus 111a.

Naturally, for data base systems which utilize special characters to indicate EOW, EOS, and EOP, circuitry analogous to latch 9-9, exclusive OR gate array 9-2c, and NAND gate 9-10 may be used in a similar manner as these circuit elements are used to detect an EOD character. Furthermore, the programming leads of exclusive OR gate arrays 9-2a and 9-2b need not be hard wired to logical zero or logical one signals, but rather could be wired to output signals available from a memory device, if desired. Still further, one or more of latches 9-9, 9-11, and 9-13 can be replaced by hard wiring the programming input leads of exclusive OR gate arrays 9-2c, 9-2d, and 9-2e, respectively, to appropriate logical zero and logical one signals, although, as previously described, by utilizing latches 9-9, 9-11, and 9-13, the delimiter logic 113 of Fig. 2 can be utilized with any data base, regardless of the specific character which that data base uses as an EOD, EOC, and EOT character.

Word logic 112

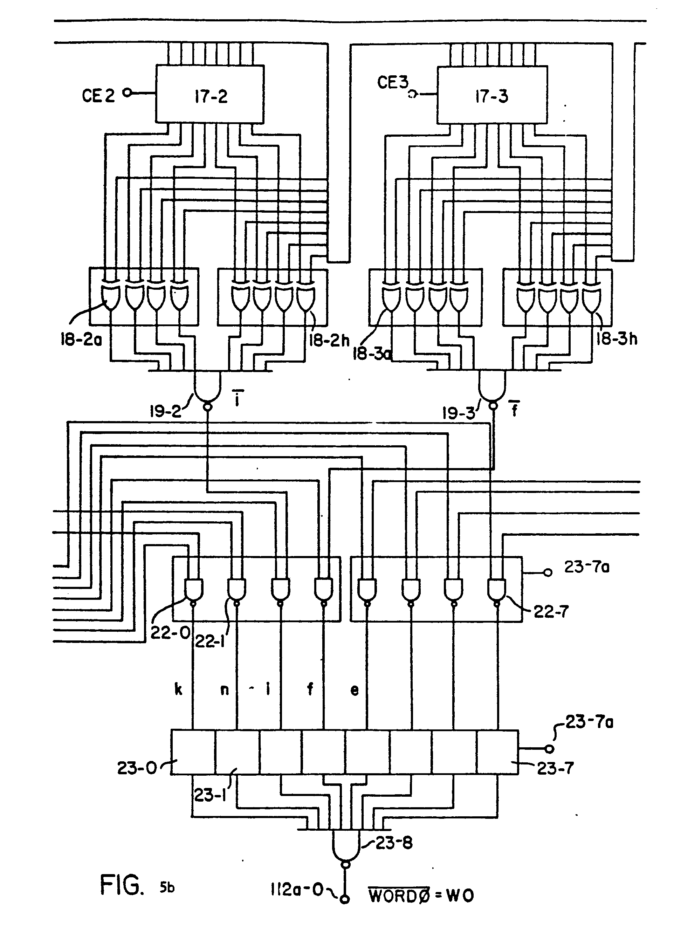

Referring to Fig. 5, the operation of word logic 112 will now be described. Fig. 5 depicts a portion of word logic 112 which is capable of detecting a predefined string of up to eight characters. Although not shown in Fig. 5, word logic 112 includes a latch (such as a 74373 device manufactured by National) provided between mass storage device 111 (Fig. 1) and bus 111a, in order to store data output from mass storage device 111 and provide this data to the remainder of word logic 112 until the next data word has been made available by mass storage device 111. Naturally, other embodiments of this invention will become readily apparent to those of ordinary skill in the art in light of the teachings of this specification which will allow character strings of more than (or, if desired, less than eight characters to be detected. It is also to be understood that word logic 112 typically comprises a plurality of the type of circuits shown in Fig. 5, in order that a plurality of character strings may be detected simultaneously. Thus, for example, in this embodiment word logic 112 contains a plurality of sixteen circuits of the type shown in Fig. 5, and thus a plurality of sixteen separate character strings, each character string comprising as many as eight characters, may be detected simultaneously as character data is transferred from mass storage device 111 on bus 111a. Since each such circuit contained within word logic 112 is identical, the description of one such circuit as shown in Fig. 5 will fully describe the operation of word logic 112.

By way of example, assume that it is desired to locate each occurrence of the word "Knife" within the character data stored in mass storage device 111 (Figure 1). Because this embodiment of word logic 112 is capable of detecting up to sixteen character strings simultaneously, "knife" will be referred to as word Ø or WØ to distinguish from other words being detected. First, the circuit of Fig. 5 is programmed in order to be able to detect each occurrence of the word "knife". To do this, programming logic 116 (Fig. 1) sequentially stores within each character latch 17-0 through 17-7 a binary signal corresponding to the inverse of the binary signal representing each letter of the word "knife". Thus, programming logic 116 provides on bus 111a address signals A4 through A0 of 0000, together with suitable enabling signals (not shown) to enable decoder 16. These address signals are applied to decoder 16 which comprises, for example, a 74154 manufactured by National. In response to this 0000 address signal, decoder 16 provides a positive going chip enable 0 (CE0) signal, which is applied to character latch 17-0, thus causing the data bits D7 through D0 provided on bus 111a by programming logic 116 to be stored in latch 17-0. Because the letter "k" is depicted in ASCII as a binary 01101011, programming logic 116 provides a D0 through D7 signal on bus 111a of 10010100, which is stored in character latch 17-0.

Next, programming logic 116 provides an address signal A4 through A0 of 0001, which, together with suitable enabling signals, cause decoder 116 to provide a positive going CE1 signal which is applied to character latch 17-1, thus causing character latch 17-1 to store the D7 through D0 signal provided by programming logic 116. At this time, programming logic 116 provides a D7 through D0 signal of 10010001, the inverse of the binary signal 01101110 which denotes the letter "n" in ASCII. In a similar manner, programming logic 116 sequentially generates address signals which, together with suitable enabling signals, cause decoder 16 to provide positive going CE2 through CE7 signals, thereby causing data words provided by programming logic 116 to be stored in character latches 17-2 through 17-7, respectively. Since the selected word is "knife", the data which is stored in character latch 17-2 is a binary 10010110, corresponding to the inverse of the binary representation of the ASCII letter "i". The data stored within character latch 17-3 is a binary 10011001, (the inverse of the letter "f"), and the data stored within character latch 17-4 is a binary 10011010 (the inverse of the letter "e"). Because the word "knife" contains only five letters, it is unimportant what is stored in character latches 17-5 through 17-7, as the presence or absence of the characters detected by character latches 17-5 through 17-7 and their associated components will be masked by NAND gates 22-5 through 22-7, respectively, in order to have no effect on the $\overline{WORDØ}$ output signal provided on output lead 112a-0. Output lead 112a-Ø0 comprises one of the sixteen leads (leads 112a-1 through 112a-15 not shown) forming bus 112a. Leads 112a-0 through 112a-15 provide word signals $\overline{WORDØ}$ ($\overline{WØ}$) through $\overline{WORD15}$ ($\overline{W15}$), respectively.

The masking of unneeded characters is provided as follows. After loading the required data into latches 17-0 through 17-7, programming logic 116 sets onto bus 111a an eight bit data word which defines which characters are to be masked by NAND gates 22-0 through 22-7. This eight bit mask word is stored in latch 20 (which may comprise, for example, a 74374 manufactured by National) upon receipt of a clock signal provided by decoder 21 in response to the CE8 signal from decoder 16, which is generated in response to appropriate signals from programming logic 116. Decoder 21 comprises, for example, a 74138 manufactured by National. Because "knife" contains only five characters, the eight bit mask provided by programming logic 116 and stored in latch 20 is a binary 00011111, indicating that the three characters detected by character latches 17-5 through 17-7 and their associated components are to be masked.

After the programming of the character latches 17-0 through 17-7 and the masking latch 20 of the $\overline{WORDØ}$ circuit of Fig. 5, the character latches and masking latches of the WORD1 through WORD15 circuits are programmed in a similar manner in order to allow these WORD1 through WORD15 circuits to detect additional words simultaneously with the WORDØ circuit detecting occurrences of the word "knife".

Mass storage device 111 then transfers its contents on a character-by-character basis to bus 111a. Each data bit D7 through D0 of each character transferred onto bus 111a is applied to one input lead of a plurality of eight exclusive OR gates, each such exclusive OR gate being associated with one character latch 17-0 through 17-7. Thus, the D0 bit is applied to one input lead of exclusive OR gate 18-0a associated with character latch 17-0, one input lead of exclusive OR gate 18-1a associated with character latch 17-1, . . ., and one input lead of exclusive OR gate 18-7a associated with character latch 17-7. The remaining input lead of each exclusive OR gate receives the appropriate bit from its associated character latch 17-0 through 17-7. Thus, exclusive OR gate 18-0a receives the D0 signal from bus 111a and the least significant bit stored in character latch 17-0. Similarly, exclusive OR gate 18-0b receives the D1 signal from bus 111a, and the second least significant bit stored in character latch 17-0, etc. Because character latch 17-0 stores the binary inverse of the first character "k" to be detected, when the character "k" is set onto bus 111a, each exclusive OR gate 18-0a through 18-0h receives complementary input signals (i.e., one input signal is high, and the other input signals is low), and thus the output signal from each exclusive OR gate 18-0a through 18-0h is a logical one, which are in turn applied to the input leads of NAND gate 19-0, thus providing a logical zero $\overline{k}$ output signal from NAND gate 19-0. Conversely, if a character other than a "k" is set onto bus 111a, at least one exclusive OR gate 18-0a through 18-0h receives identical signals on its input leads i.e. either both logical zero or both logical one), and thus that exclusive OR gate generates a logical zero output signal which causes NAND gate 19-0 to provide a logical one k̄ output signal, indicating that the character "k" has not been detected.

In a similar manner, the remaining character latches 17-1 through 17-4, and their associated exclusive OR gates and NAND gates, provide logical zero n̄, ī, f̄ and ē signals on the output lead of NAND gates 19-1 through 19-4 when the characters "n", "i", "f", and "e", respectively, are detected. At all other times, the signals on the output lead of NAND gates 19-1 through 19-4 are logical one.

The output signals from NAND gates 19-0 through 19-7 are applied to one input lead of masking NAND gates 22-0 through 22-7, respectively. Masking NAND gates 22-0 through 22-7 mask the detected character signals provided by NAND gates 19-0 through 19-7 in accordance with the masking word stored within masking latch 20. The least significant bit stored in masking latch 20 is applied to the other input lead of NAND gate 22-0, the second least significant bit stored within that masking latch 20 is applied to the other input lead of NAND gate 22-1, etc., and the most significant bit stored in masking latch 20 is applied to the other input lead of NAND gate 22-7. Because the three most significant bits stored in masking latch 20 are zeroes, and these logical zeroes are applied to one input lead of NAND gates 22-5 through 22-7, NAND gates 22-5 through 22-7 always provide logical one signals on their output leads. Thus, even though the output signals from NAND gates 19-5 through 19-7 are applied to one input lead of NAND gates 22-5 through 22-7, respectively, these signals from NAND gates 19-5 through 19-7 have no effect on the output signals provided by NAND gates 19-5 through 19-7. Conversely, because the five least significant bits stored in masking latch 20 are logical ones, the output signals provided by NAND gates 22-0 through 22-4 will be the inverse of the signals provided by NAND gates 19-0 through 19-4, respectively. Thus, when the character "k" is set onto bus 111a, NAND gate 19-0 provides a logical zero k̄ signal to one input lead of NAND gate 22-0, which in turn provides a logical one k output signal. In a similar manner, when the letter "n" is set onto bus 111a, NAND gate 22-1 provides a logical one n output signal; when the character "i" is set onto bus 111a, NAND gate 22-2 generates a logical one i output signal; when the character "f" is set onto bus 111a, NAND gate 22-4 generates a logical one f output signal and when the character "e" is set onto bus 111a, NAND gate 22-5 generates a logical one e output signal. As previously described, NAND gates 22-5 through 22-7, corresponding to the detection of characters which are not of interest when searching for the character string "knife", always provide logical one output signals.

The output signals from NAND gates 22-0 through 22-7 are applied to the input leads of shift registers 23-0 through 23-7, respectively. Shift registers 23-0 is an eight bit shift register, shift register 23-1 is a seven bit shift register, shift register 23-2 is a six bit shift register, etc., and shift register 23-7 is a one bit shift register. Shift registers 23-0 through 23-7 are formed, for example, by the appropriate connection of a plurality of 74174 hex D-type flip flops manufactured by National. Shift registers 23-0 through 23-7 each receive a clock signal on input lead 23-7a which is provided by mass storage device 111 (Fig. 1) on bus 111a, indicating that a valid data character is present on bus 111a. The signals provided by NAND gates 22-0 through 22-7 are received by shift registers 23-0 through 23-7, and the content of each shift register 23-0 through 23-7 is shifted to the next most significant bit within that shift register upon receipt of each clock signal on lead 23-7a. In this manner, the output signals as provided by shift registers 23-0 through 23-7 depict the positional relationship of the detected characters.

In order to provide a logical zero $\overline{\text{WORD0}}$ signal indicating when the word "knife" is detected, and provide a logical one $\overline{\text{WORD0}}$ signal when the word "knife" is not detected, shift registers 23-0 through 23-7 are used. In this example, the character string "knife□□□" is to be detected, where each "□" indicates a "don't care" character. To detect the character string "knife□□□", the most recently detected character must be a "dont' care" character, the second most recently detected character must also be a "don't care" character, the third most recently detected character must be a "don't care" character, the fourth most recently detected character must be the letter "e", the fifth most recently detected character must be a "f", the sixth most recently detected character must be an "i", the seventh most recently detected character must be an "n", and the eighth most recently detected character must be a "k". Accordingly, since the character "k" must be the eighth most recently detected character, the output signal from NAND gate 22-0, indicating when the character "k" has been detected, is applied to 8 bit shift register 23-0. Similarly, since the letter "n" must be the seventh most recently detected character, the output signal from NAND gate 22-1, which indicates when the letter "n" has been detected, is applied to the input lead of seven bit shift register 23-1, etc. When the proper sequence of characters have been detected which spell "knife□□□" the output signal from each shift register 23-0 through 23-7 is a logical one, which in turn is applied to the input leads of NAND gate 23-8, thus causing NAND gate 23-8 to provide a logical zero $\overline{\text{WORD0}}$ signal on output lead 112a-0, thus indicating that "knife" has been detected. At all other times, at least one output signal from shift registers 23-0 through 23-7 is a logical zero, thus causing NAND gate 23-8 to provide a logical one $\overline{\text{WORD0}}$ signal on output lead 112a-0, thus indicating that "knife" has not been detected.

It is apparent to those of ordinary skill in the art in light of the teachings of this specification that, if desired, word logic 112 can be programmed such that programming latches 17-0 through 17-7 and their associated components detect the character string "□□□knife", rather than "knife□□□" as described above. In this event, the masking word stored in masking latch 20 will be 11111000, indicating that the three characters detected by character latches 17-0 through 17-3 and their associated components are to be masked by NAND gates 22-0 through 22-3, respectively. In this embodiment, where the "don't care" characters precede the characters to be detected, the $\overline{WORD0}$ signal goes low upon receipt of the last character in the character string being detected, rather than j characters later, where j is the number of "dont' care" characters in the character string being detected (i.e., j=3 for "□□□knifes").

It is also apparent to those of ordinary skill in the art in light of the teachings of this specification that, if desired, word logic 112 can be programmed such that the programming latches 17-0 through 17-7 and their associated components detect the character string "efink□□□". In this event, the masking words stored in masking latch 20 will be 00000111, indicating that the three characters detected by character latches 17-5 through 17-7 and their associated components are to be masked by NAND gates 22-5 through 22-7, respectively. In this event, however, shift register 23-0 is a one bit shift register, shift register 23-1 is a two bit shift register, shift register 23-2 is a three bit shift register, etc., and shift register 23-7 is an eight bit shift register.

It is also apparent to one of ordinary skill in the art in light of the teachings of this specification that, if desired, word logic 112 can be programmed such that programming latches 17-0 through 17-7 and their associated components detect the characters string "□□□efink". In this event, the masking word stored in masking latch 20 will be 11100000, indicating that the characters detected by character latches 17-0 through 17-2 and their associated components are to be masked by NAND gates 22-0 through 22-2, respectively. In this event, shift register 23-0 is a one bit shift register, etc., and shift register 23-7 is an eight bit shift register.

If it is desired to detect the occurrence of either upper case or lower case letters, the sixth least significant bit received from mass storage device 111 is held high and the word latches 17-0 through 17-6 are loaded with data to cause the detection of upper case letters forming the desired word. Alternatively, the sixth least significant bit received from mass storage device 111 is held low, and the word latches 17-0 through 17-6 are loaded with data to cause the detection of lower case letters forming the desired word. In either event, both upper and lower case letters will be detected by latches 17-0 through 17-6 and their associated components, as the sixth least significant bit, which distinguishes between upper and lower case, is effectively masked. In another embodiment of this invention, the output signal from the sixth least significant exclusive nor gates 18-0b, 18-1b, . . ., 16-6b, are held high, thereby effectively masking the sixth least significant bit and thus providing output signals when either upper or lower case letters are detected.

## Set logic 114

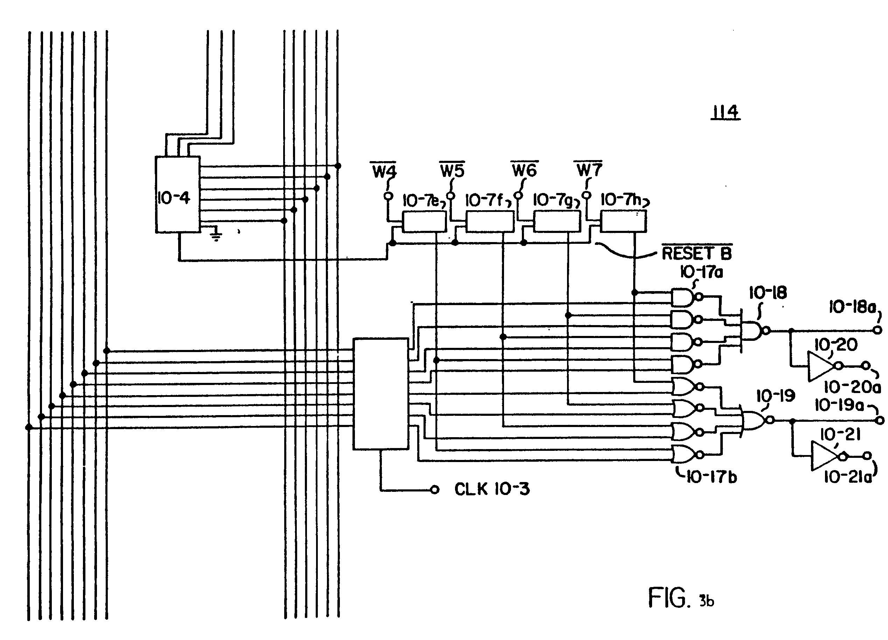

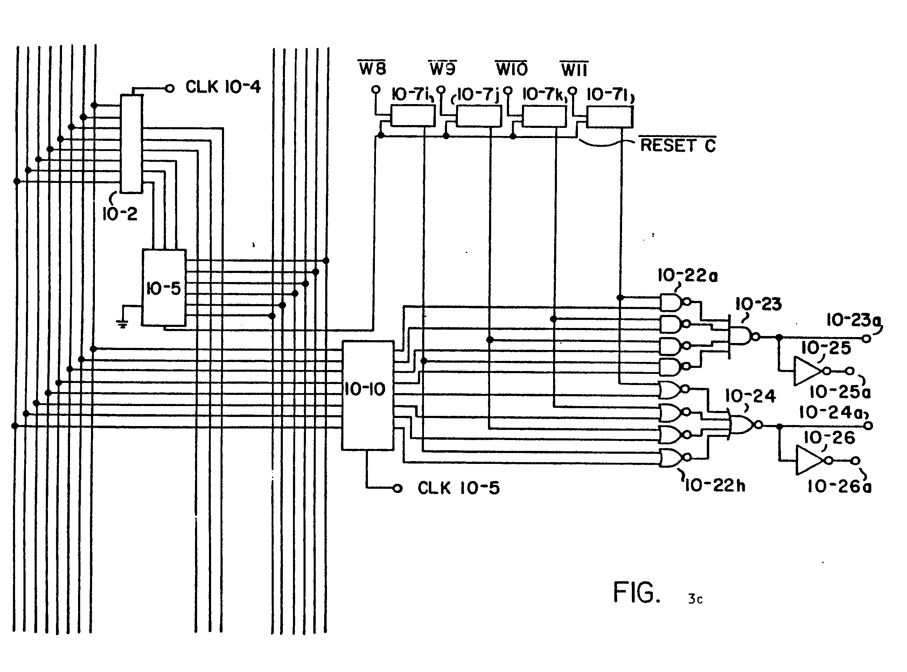

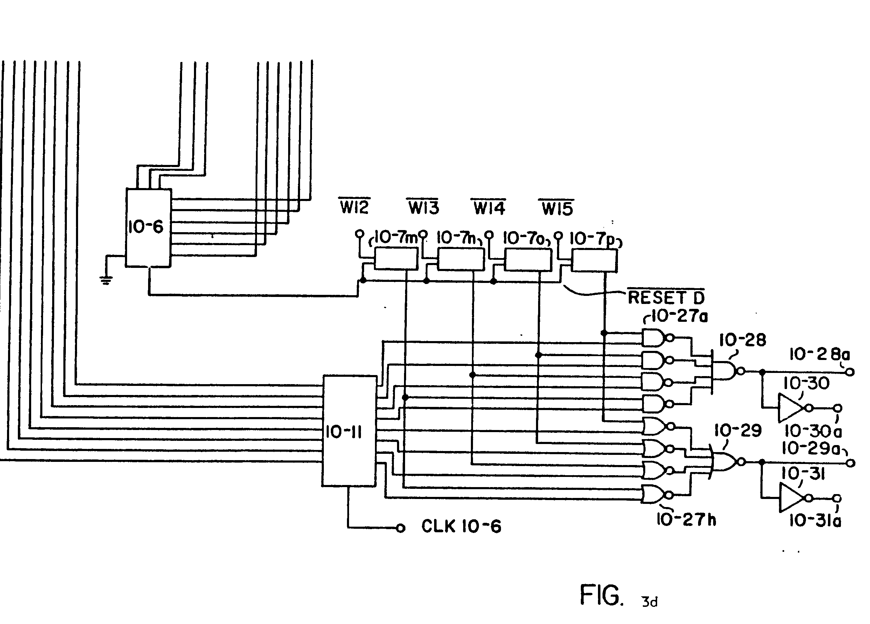

Figs. 3a through 3d form a schematic diagram of set logic 114. Although not shown in Figure 3, set logic 114 includes a latch (such as a 74373 device manufactured by National) provided between mass storage device 111 (Figure 8) and bus 11a, in order to store data output from mass storage device 111 and provide this data to the remainder of set logic 114 until the next data word has been made available by mass storage device 111. Set logic 114 serves to determine when a set of selected words are detected within the same sentence, paragraph, document, etc., as defined by the user's search strategy. For example, that portion of set logic 114 shown in Fig. 3a detects when a predefined set of words 0 through 3 (i.e., a user defined set of $\overline{W0}$ through $\overline{W3}$ signals generated by word logic 112 (shown in Figs. 1 and 5) are detected within the same sentence or paragraph, etc. As previously described, the $\overline{W0}$ through $\overline{W3}$ signals are provided by word decode logic 112 (Fig. 12). Set logic 114 as shown in Fig. 5 is capable of receiving sixteen word signals (i.e., $\overline{W0}$ through $\overline{W15}$, although it is apparent to one of ordinary skill in the art in light of the teachings of this specification that set logic 114 can be constructed to operate on any desired number of words which are each detected, for example, by a unique one of an equal number of circuits as shown in Fig. 5 which form word logic 112. Furthermore, as will now be fully described, set logic 114 is capable of forming a plurality of sets, each set being generated by a plurality of four words. It is readily apparent to one of ordinary skill in the art in light of the teachings of this specification that set logic 114 can be constructed in order to form any desired number of sets, each set being generated in response to any desired number of words. Because the embodiment of set logic 114 depicted in Fig. 3 is formed of four substantially identical subcircuits (one such subcircuit being substantially shown in each of Figs. 3a through 3d), the following description of the operation of the subcircuit of Fig. 10a is sufficient to describe the operation of the entire set logic 114 depicted in Fig. 3a through 3d.

Referring to Fig. 3a, leads 9-1a through 9-1h are connected to bus 111a to receive the data signals D0 through D7, respectively. The delimiter signals (EOT, EOC, EOD, EOP, EOS, and EOW) are received from delimiter logic 113 (Figs. 1 and 2) on bus 113a. The $\overline{W0}$ through $\overline{W3}$ signals are received from appropriate portions of word logic 112 (Figs. 1 and 5) and applied to the $\overline{SET\ 3}$ input leads of $\overline{SR}$ latches 10-7a through 10-7d, respectively. Latches 10-7a through 10-7d serve to store data indicating when words 0 through 3, respectively, have been detected by word logic 112. $\overline{SR}$ latches 10-7a through 10-7d each comprise, for example, one of the four latches contained within a DM74279 device manufactured by National.

Multiplexer 10-3 selects the appropriate delimiter signal or ground, as will be fully described later) and, in response thereto, provides a $\overline{RESETA}$ signal which is applied to the $\overline{RESET\ (R)}$ input leads of latches 10-7a through 10-7d, causing latches 10-7a through 10-7d to be reset to store logical zeros when the $\overline{RESETA}$ signal is a logical zero. Multiplexer 10-3 comprises, for example, a 74151 device manufactured by National. Latch 10-1 stores information provided by programming logic 116 (Fig. 1) on bus 111a during the programming of the text comparator prior to executing a textual search strategy. Latch 10-1 comprises, for example, a 74373 device manufactured by National.

Latch 10-8 (for example a 74374 device) serves to store masking information which is provided by programming logic 116 (Fig. 1) to latch 10-8 via bus 111a during the programming of the text comparator of this invention prior to the execution of a user-defined textual comparison search strategy. Logical AND circuitry 10-36 combines the $\overline{W0}$ through $\overline{W3}$ signals in a logical AND and a logical NAND fashion and provides the SET1AND (S2AND) and the $\overline{SET2AND}$ ($\overline{S1AND}$) signals on leads 10-14a and 10-16a, respectively. Similarly, the logical OR circuitry 10-37 combines the $\overline{W0}$ through $\overline{W3}$ signals in a logical OR and a logical NOR fashion and provides the SET1OR (S1OR) and the SET1OR ($\overline{S1OR}$) signals on leads 10-13a and 10-15a, respectively. Logical AND circuitry 10-36 and logical OR circuitry 10-37, when masked by the masking data stored in masking latch 10-8, provide output signals which indicate whether the word 0 through 3 have been detected between two occurrences of the signal selected by decoder 10-3, thereby providing output signals indicating whether words 0 through 3 have been detected in the same reference, for example.

In order to program set logic 114, programming logic 116 (Fig. 1) first sets onto the D0 through D7 data lines of bus 111a the information which is to be stored in latch 10-1. Programming logic 116 then provides the appropriate A0 through A2 and E1 through E3 signals, thereby causing multiplexer 9-18 (Fig. 2a) to generate a positive going CLK10-1 signal, which is applied to latch 10-1, thereby causing the D0 through D7 data on bus 111a to be stored within latch 10-1. The three least significant bits stored in latch 10-1 are applied to the address input leads of multiplexer 10-3, and similarly the next three least significant bits stored in latch 10-1 are applied to the address input leads of multiplexer 10-4. The three address signals applied to multiplexer 10-3 define which delimiter signal (or ground, if the input lead of multiplexer 10-3 which is connected to ground, as shown, is selected by multiplexer 10-4 in response to the address signals provided thereto by latch 10-1) are to generate the $\overline{RESETA}$ signal on the output lead of multiplexer 10-3. Ground is selected by multiplexer 10-3 in order to generate a $\overline{RESETA}$ signal when desired to reset the contents of flip-flops 10-7a through 10-7d, for example on power-up of the set logic 114. Next, programming logic 116 (Fig. 1) sets onto the D0 through D7 data leads of bus 111a the masking data which is to be stored in masking latch 10-8. Programming logic 116 then sets onto bus 111a the A0 through A2 and the E1 through E3 signals which cause demultiplexer 9-18 (Fig. 2a) to generate a positive going CLK10-2 signal, which in turn is applied to latch 10-8, thereby causing the data on leads D0 through D7 of bus 111a to be stored in latch 10-8. If required by the user defined search strategy, programming logic 116 then repeats these steps in order to program the remaining latches 10-2, 10-9, 10-10, and 10-11 of set logic 114.

Assume, for example, that it is desired to locate within the textual information stored in mass storage device 111 all instances where the word "knife" (WORD0) occurs within the same sentence as the word "blood" (WORD1). Programming logic 116 programs word logic 112 as previously described, to cause WORD0 to be the word "knife" and WORD1 to be the word "blood", thus causing a low $\overline{W0}$ signal and a low $\overline{W1}$ signal to be generated upon detection of the words "knife" and "blood", respectively. Because it is desired to locate these two words only within the same sentence, the latches 10-7a through 10-7d must be reset upon receipt of the EOS delimiter signal. Accordingly, programming logic 116 stores within latch 10-1 three least significant bits which, when applied to the address input leads of multiplexer 10-3, cause multiplexer 10-3 to select the EOS signal applied via bus 113a to generate the $\overline{RESETA}$ signal. Furthermore, because only WORD0 and WORD1 are of interest in this particular search, programming logic 116 causes to be stored in masking latch 10-8 an eight bit mask which will cause the $\overline{W2}$ and $\overline{W3}$ signals to have no effect on the output signals generated by the logical AND logic circuitry 10-36.

Because in this example the words "knife" and "blood" are to be combined a logical AND operation, the output signals from logical OR circuitry 10-37 are not used, and thus the value of the four most significant bits stored in masking latch 10-8 is unimportant. However, in order to cause logical AND circuitry 10-36 to provide S1AND and $\overline{S1AND}$ output signals generated by the logical operation S1AND=($\overline{W0}$ and $\overline{W1}$) the four least significant bits (D4 through D0) provided by programming logic 116 and stored in latch 10-8 must be equal to 1100, respectively. In this manner, the least significant bit stored in masking latch 10-8 is a logical zero, which is applied to one input lead of NOR gate 10-12h. With a logical zero signal applied to one input lead of NOR gate 10-12h, the other input lead of NOR gate 10-12h, which is connected to the Q output lead of flip flop 10-7a, controls the output signal from NOR gate 10-12h. Similarly, with the second least significant bit being a logical zero, which is applied to one input lead of NOR gate 10-12g, the other input lead of NOR gate 10-12g, which is connected to the Q output lead of flip flop 10-7b, causes NOR gate 10-12g to generate its output signal in response to the W1 signal stored in flip flop 10-7b. Because the third and fourth least significant bits stored in masking latch 10-8 are logical ones and are each applied to one input lead of NOR gates 10-12f and 10-12e, respectively, NOR gates 10-12e and 10-12f always provide logical zero output signals, indicating that the W2 and W3 signals stores in latches 10-7c and 10-7d, respectively (and thus WORD2 and WORD3) are unimportant and form no part of the logical operation performed by logical AND circuitry 10-36.

The output signals from NOR gates 10-12e through 10-12h are applied to the input leads of NOR gate 10-14. Because the output signals from NOR gates 10-12e and 10-12f are always a logical zero, they will have no effect on the output signal generated by NOR gate 10-14. However, only when the output signals generated by NOR gates 10-12g and 10-12h are logical zeros, indicating that logical ones are stored in both shift registers 10-7a and 10-7b (i.e., logical zero $\overline{W0}$ and $\overline{W1}$ signals have been received and thus logical one W0 and W1 signals stored in flip flops 10-7a and 10-7b, respectively, since the last $\overline{RESETA}$ signal) will the S1AND output signal from NOR gate 10-14 be a logical one, indicating that the words "knife" and "blood" have both been located in a single sentence.

As previously described, the $\overline{RESETA}$ signal is, in this example, generated by multiplexer 10-3 in response to the EOS signal. Accordingly, the data stored in latches 10-7a and 10-7d is reset to logical zeros in response to a logical zero $\overline{RESETA}$ signal. If after a logical zero $\overline{RESETA}$ signal the word "knife" is detected, a logical zero $\overline{W0}$ signal is applied to the $\overline{3}$ input lead of flip-flop 10-7a, thus causing a logical one to be stored in flip flop 10-7a. This generates a logical one Q output signal from flip-flop 10-7a which is applied to one input lead of NOR gate 10-12h, thus causing NOR gate 10-12a to generate a logical zero output signal. However, because the word "blood" (WORD1) has not been detected, a logical zero is still stored in shift register 10-7b, and shift register 10-7b provides a logical zero Q output signal which is applied to one input lead of NOR gate 10-12g. This, together with the logical zero input signal applied to its other input lead from latch 10-8, causes NOR gate 10-12g to provide a logical one output signal, thus causing NOR gate 10-14 to generate a logical zero SET1AND output signal, indicating that the words "knife" and "blood" have not both been detected in the same sentence. If an EOS signal is now generated prior to the detection of the word "blood", multiplexer 10-3 generates a logical zero $\overline{RESETA}$ signal and the shift registers 10-7a through 10-7d are reset to store logical zeros, thereby preventing an erroneous output signal from logical AND circuitry 10-36 should the word "blood" be detected in a subsequent sentence which does not also contain the word "knife".

In a similar manner, if the search strategy requires the location of all occurrences of *either* the wrod "knife" *or* "blood" in the same sentence, the logical OR circuitry 10-37 is utilized. In this event, the four most significant masking bits stored in masking latch 10-8 by programming logic 116 are 0011. With the most significant bit from masking latch 10-8 being applied to one input lead of NAND gate 10-12a, NAND gate 10-12a always generates a logical one output signal, and thus the W3 signal stored in shift register 10-7d has no effect on the output signals generated by OR logic circuitry 10-37. Similarly, because the second most significant masking bit stored in masking latch 10-8 is applied to one input lead of NAND gate 10-12b, NAND gate 10-12b always generates a logical one output signal, and thus the W2 signal stored in shift register 10-7c has no effect on the output signal generated by logical OR circuitry 10-37. The third and fourth most significant masking bits stored in masking latch 10-8 are logical ones, and are applied to one input lead of NAND gates 10-12c and 10-12d, respectively. These logical one signals cause the output signals from NAND gates 10-12c and 10-12d to be generated in response to the W0 and W1 signals stored in flip-flops 10-7a and 10-7b, respectively, and applied to the other input lead of NAND gates 10-12d and 10-12c, respectively. If the word "knife" is detected, a logical zero $\overline{W0}$ signal is generated by word logic 112, and thus a logical one W0 signal is stored in flip-flop 10-7a. This logical one W0 signal causes NAND gate 10-12d to generate a logical zero output signal which causes NAND gate 10-13 to generate a logical one S1OR signal on output lead 10-13a (and causes inverter 10-5 to generate a logical zero $\overline{S1OR}$ signal on output lead 10-15a), thus indicating that the word "knife" has been detected. Similarly, if the word "blood" is detected, a logical zero $\overline{W1}$ signal is generated by word logic 112 and thus a logical one W1 signal is stored in flip flop 10-7b. This logical one W1 signal causes NAND gate 10-12c to generate a logical zero output signal, which in turn causes NAND gate 10-13 to generate a logical one S1OR signal on output lead 10-13a (and causes inverter 10-15 to generate a logical zero S1OR signal on output lead 10-15a), thus indicating that the word "blood" has been detected. If neither the word "knife" or the word "blood" is detected, flip flops 10-7a through 10-7d will each store a logical zero signal, NAND gates 10-12a through 10-12d each generate logical one output signals, NAND gate 10-13 generates a logical zero S1OR signal, and inverter 10-15 generates a logical one $\overline{S1OR}$ signal), thus indicating that neither "knife" or "blood" has been detected.

Set combination logic 115

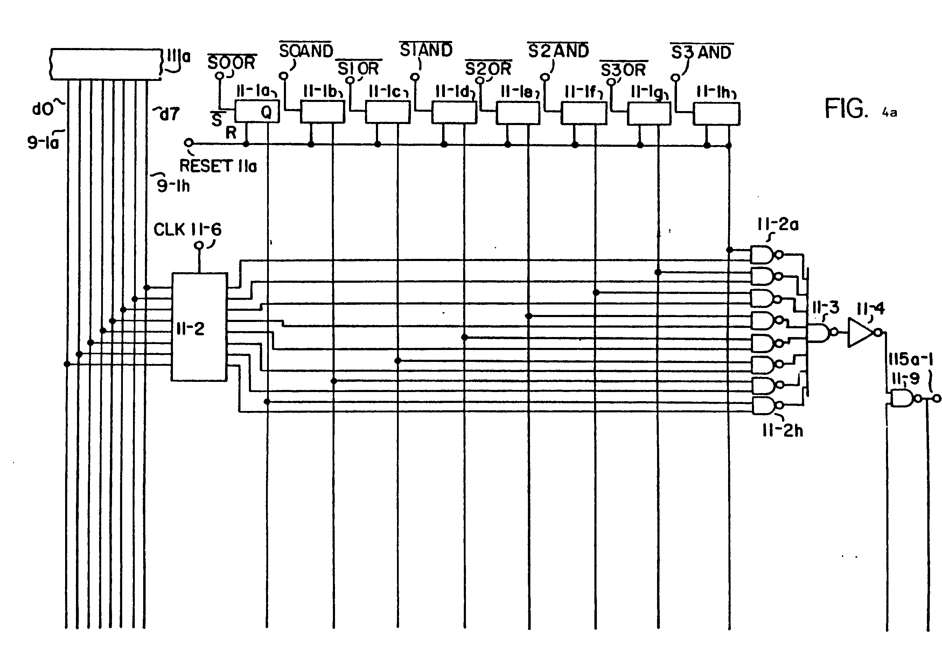

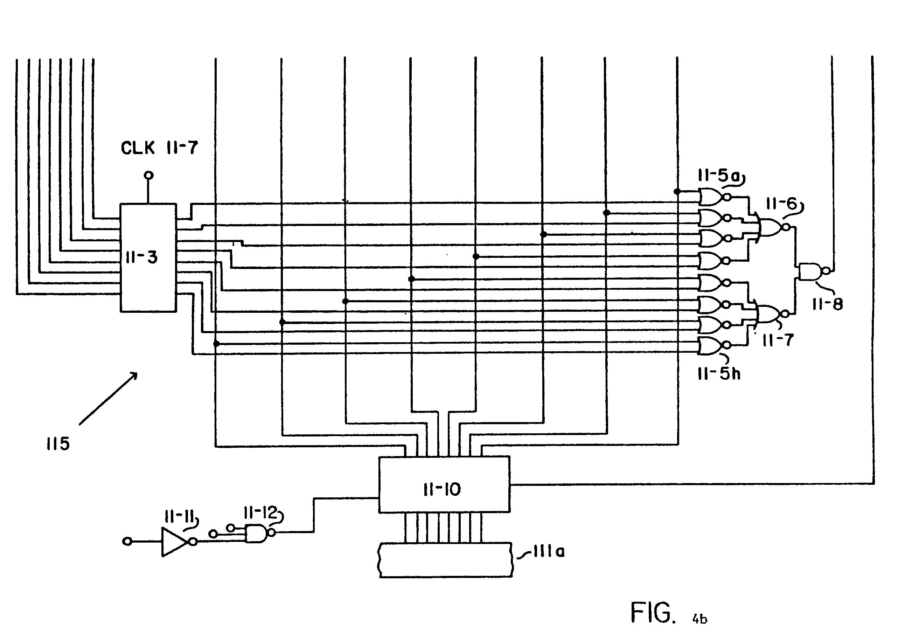

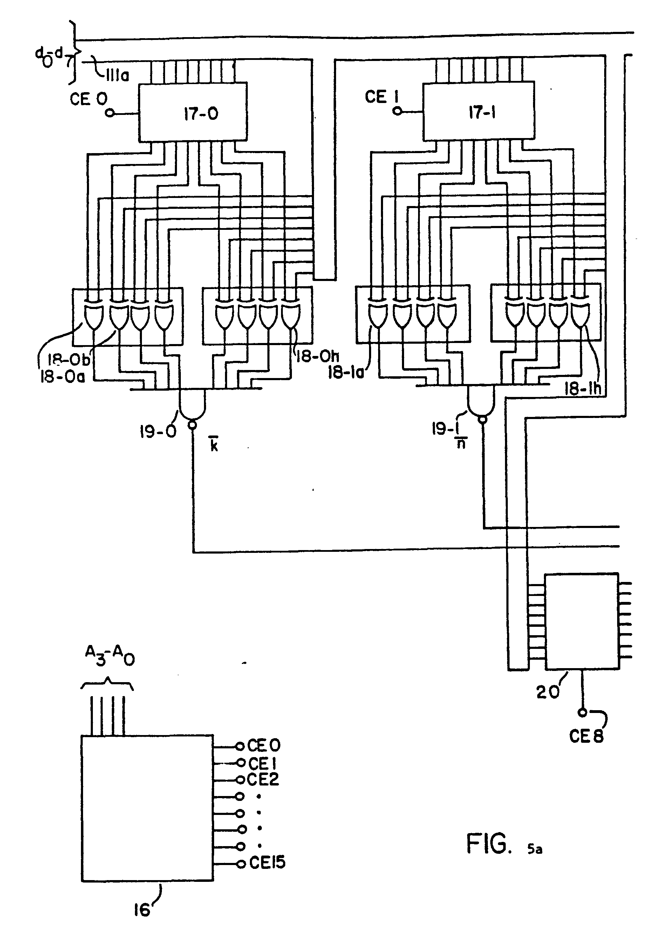

Set combination logic 115 serves to combine the set signals provided by set logic 114 (Figure 3) in accordance with a user defined search strategy. Although not shown in Figure 4, set combination logic 115 includes a latch (such as a 74373 device manufactured by National) provided between mass storage device 111 (Fig. 1) and bus 111a, in order to store data output from mass storage device 111 and provide this data to the remainder of set combination logic 115 until the next data word has been made available by mass storage device 111. Set combination logic 115 includes latches 11-2 and 11-3 (which comprise, for example 74374 devices manufactured by National) which store set combination words provided by programming logic 116 in response to the user defined search strategy. Latches 11-2 and 11-3 store this information in response to the CLK11-6 and CLK11-7 signals, respectively, generated by decoder 9-17 (Fig. 2), as previously described). Set combination logic 115 also includes $\overline{RS}$ flip-flops 11-1a through 11-1h which comprise, for example, 74279 devices manufactured by National. Shift registers 11-1a through 11-1h store the $\overline{S0OR}$, $\overline{S1AND}$ through $\overline{S3OR}$, $\overline{S3AND}$ signals provided by set logic 114 (Figure 3). Flip-flops 11-1a through 11-1h are reset by reset signal 11a provided by programming logic 116 (Fig. 1) when a search strategy is begun.

Latch 11-2 stores the masking word provided by programming logic 116, in order to cause NAND gates 11-2a through 11-2h and their associated components to combine the set signals stored in flip flops 11-1a through 11-1h in a logical OR function. For example, if it is desired to combine the $\overline{S0OR}$ and $\overline{S0AND}$ signals, programming logic 116 (Figure 1) causes latch 11-2 to store D7 through D0 signals of 00000011,

11

where the logical ones indicate which set signals are to be combined in the logical OR function. Thus, latch 11-2 provides logical zero signals to one input lead of NAND gates 11-2a through 11-2f, thereby causing the output signals from these NAND gates 11-2a through 11-2f to be logical ones. Latch 11-2 also provides logical one signals to one input lead of NAND gates 11-2g and 11-2h. The other input leads of NAND gates 11-2g and 11-2h are connected to the Q output leads of flip flops 11-1a and 11-1b, respectively. Prior to the $\overline{SOOR}$ and $\overline{SOAND}$ signals going low, the Q output signals from flip-flops 11-1a and 11-1b are logical zero, thus causing the output signals from 11-2g and 11-2h to be logical ones. This causes the output signal from NAND gate 11-3 to be logical zero, and the output signal from inverter 11-4 to be logical one. Thus, only when a logical zero $\overline{SOOR}$ signal or $\overline{SOAND}$ signal has been generated by set logic 114 (Fig. 10), will the Q output signal from flip-flops 11-1a or 11-1b be a logical one, thereby causing the output signal from NAND gates 11-2g and 11-2h to be a logical zero. With one input signal to NAND gate 11-3 a logical zero, the output signal from NAND gate 11-3 is a logical one, indicating that the logical OR combination of the set signals defined by the masking word stored in latch 11-2 has been met. This logical one signal from NAND gate 11-3 causes the output signal from inverter 11-4 be a logical zero, thereby causing the output signal from NAND gate 11-9 to be a logical one.

In a similar manner, latch 11-3 stores a masking word provided by programming logic 116 in order to combine the set signals applied to flip flops 11-1a through 11-1h to be combined in a logical AND fashion. Thus, if it is desired to combine the $\overline{SOOR}$ signal with the $\overline{SOAND}$ signal in a logical AND function, latch 11-3 is programmed by programming logic 116 (Fig. 1) to store D7 through D0 signals 11111100. With logical ones applied to one input lead of NOR gates 11-5a through 11-5f, the output signals from these NOR gates are logical zeroes. With logical zero signals applied by latch 11-3 to one input lead of NOR gates 11-5g and 11-5h, the output signals from NOR gates 11-5g and 11-5h will be logical zero only when both the $\overline{SOOR}$ and $\overline{SOAND}$ signals have been logical zero, thus causing logical one Q signals to be provided by both flip-flops 11-1a and 11-1b, respectively. With the output signal from both NOR gates 11-5g or 11-5h logical zeros, the output signal from NOR gates 11-7 is logical one, and the output signal from NAND gate 11-8 is a logical zero, indicating that both $\overline{SOOR}$ and $\overline{SOAND}$ has been low. This causes the output signal from NAND gate 11-9 to be a logical zero.

Thus, a logical zero on the output lead of NAND gate 11-9 indicates that either the logical OR function provided by latch 11-2 and its associated components or the logical AND function provided by latch 11-3 and its associated components, has been met. This logical zero output signal from NAND gate 11-9 is available on lead 115a-1 to provide an interrupt signal to a central processing unit (CPU, not shown) if desired. This interrupt signal can be inverted by an inverter (not shown) if desired. This logical zero output signal from NAND gate 11-9 also provides a clock signal to latch 11-10 and which comprises, for example a 743734 device manufactured by National), thus causing the Q output signals from flip flops 11-1a through 11-1h to be stored in latch 11-10. Terminal 11-10a receives an output enable signal from the central processing unit, thereby causing the bits stored in latch 11-10 which indicate the status of the set signals received and stored within flip-flops 11-1a through 11-1h, to be set onto bus 111a for use by the central processing unit, if desired.

Proximity logic 117

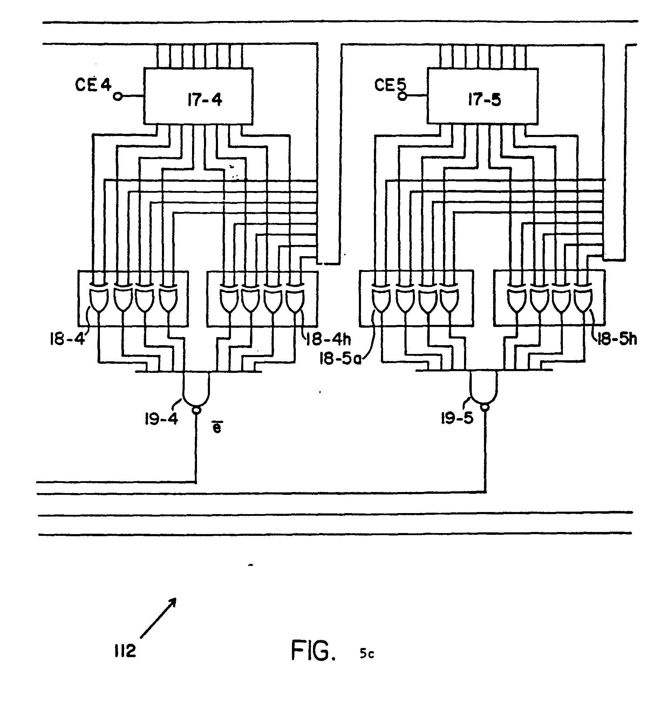

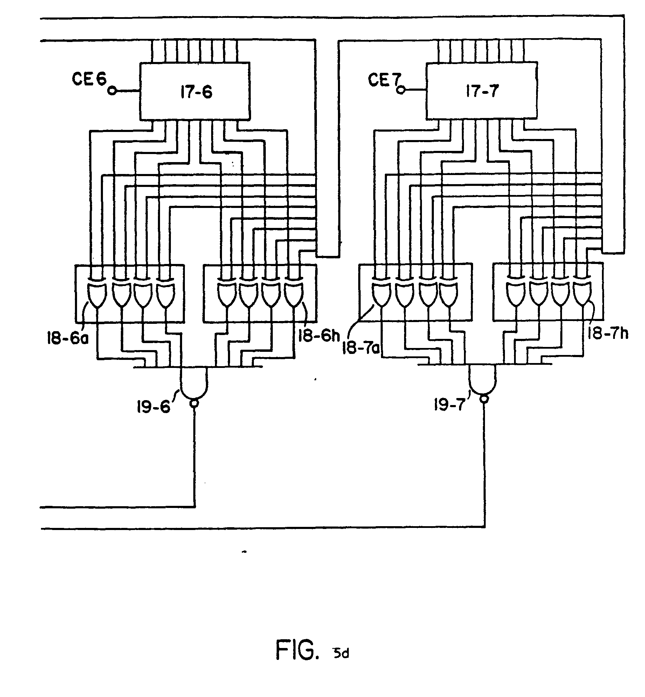

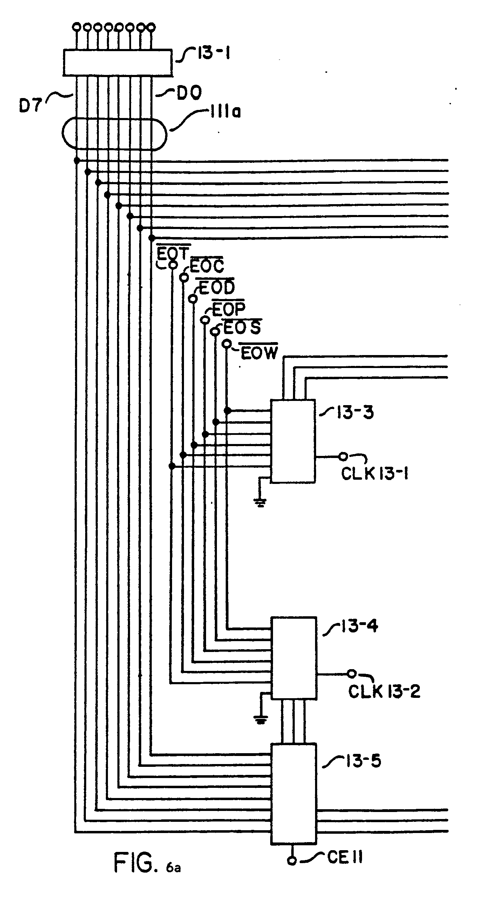

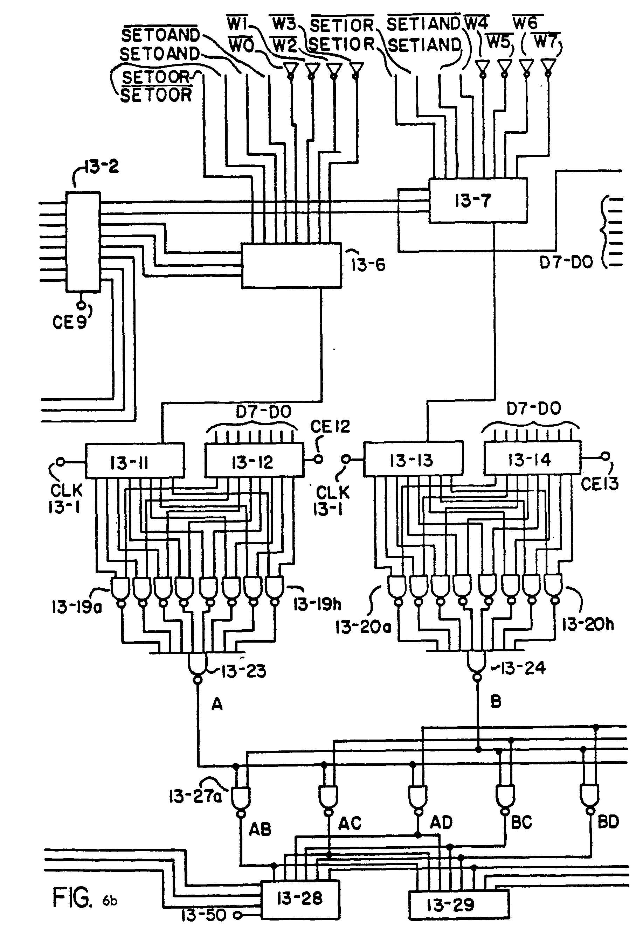

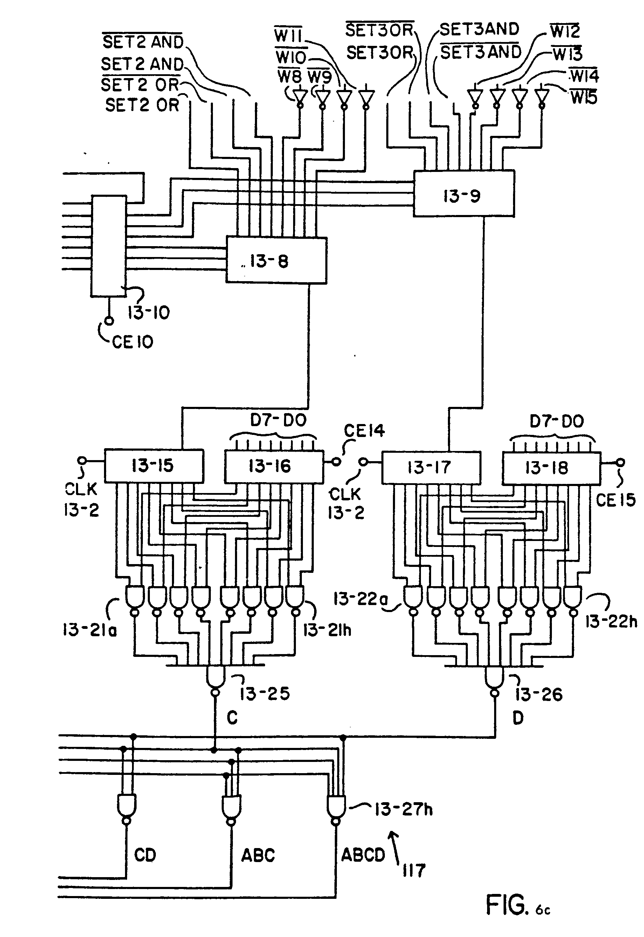

Referring to Figure 6, the operation of proximity logic 117 will now be described. Proximity logic 117 includes a latch (such as a 74374 device manufactured by National) provided between mass storage device 111 (Figure 1) and bus 111a, in order to store data output from mass storage device 111 and provide this data to the remainder of proximity logic 117 until the next data word has been made available by mass storage device 111a. Proximity logic 117 serves to detect when a first selected word (detected by word logic 112 of Fig. 5) or set (detected by set logic 114 of Fig. 3) is located within a specific distance or proximity of a second selected word or set. For example, proximity logic 117 can be programmed to detect when a first word "knife" (detected by word logic 112 as, for example, word zero) is located within n words of a second selected word "blood" (detected by word logic 112 as, for example, word four), wherein n is a selected integer ranging from −7 to 7. Naturally, it is apparent to those of ordinary skill in the art in light of the teachings of this specification that alternative embodiments of proximity logic 117 can be constructed which will allow selection from a greater number of words or sets, and where the range of proximities can be any desired number, including numbers greater than 7. Furthermore, proximity logic 117 allows detection of words or sets within a plurality of n delimiter characters. Thus, proximity logic 117 is capable, for example, of detecting when a first selected word or set is located within n sentences, paragraphs, documents, etc., of a second selected word or set.

The operation of the embodiment of proximity logic 117 shown in Figure 6 is as follows. Proximity logic 117 includes latches 13-2 and 13-5 which are programmed by programming logic 116 to store address bits which in turn are applied to decoders 13-3 and 13-4, respectively, which cause decoders 13-3 and 13-4 to select which delimiter signal will provide clock signals CLK 13-1 and CLK 13-2, respectively. Latches 13-2 and 13-5 comprise, for example, 74374 devices manufactured by National. Latch 13-2 is programmed by programming logic 116 setting onto bus 111a the desired word to be stored, and appropriate address signals which cause decoder 16 (Figure 5) to generate a CE9 signal. Latch 13-5 is then programmed by programming logic 116 setting onto bus 111a the desired bits to be stored within latch 13-5, and appropriate address signals A3 through A0 to cause decoder 16 to generate a CE11 signal. Latch CE10 (also

12

a 74374 device) is then programmed in a similar manner to provide address signals to decoders 13-8 and 13-9, which in turn each select one of a plurality of word and set signals for use by proximity logic 117, as will be more fully understood with reference to the following discussion.

The data stored within latch 13-2 also provides three address bits to decoder 13-6, which causes decoder 13-6 to select the appropriate word or set signal to be applied to the input lead of shift register 13-11. In a similar fashion, latch 13-10, which is programmed by programming logic 116 when accessed by a CE10 signal generated by decoder 16 (Figure 5), provides address signals to decoders 13-8 and 13-9 which selects the appropriate set and word signals for input to shift registers 13-15 and 13-17. Two bits from latch 13-2 and one bit from latch 13-10 serve as address input signals to decoder 13-7, thereby selecting the appropriate word and set signals for input to shift register 13-13. Latches 13-2, 13-5, and 13-10 comprise, for example, 74374 devices manufactured by National. Decoders 13-3, 13-4, 13-6, 13-7, 13-8, and 13-9 comprise, for example 74151 devices manufactured by National.

The operation of shift register 13-11, latch 13-12, and their related components is identical to the operation of shift register 13-13 and latch 13-14, shift register 13-15 and latch 13-16, and shift register 13-17 and latch 13-18, and their related components, and thus only the operation of shift register 13-11 and latch 13-12 and their associated components will be described here. Shift registers 13-11, 13-13, 13-15 and 13-17 comprise, for example 74164 serial in-parallel out shift registers manufactured by National. Latches 13-12, 13-14, 13-16, and 13-18 comprise, for example, 74374 devices manufactured by National. Latch 13-12 is programmed by programming logic 116 in response to a CE12 signal generated by decoder 16 (Figure 5) in response to the appropriate A3 through A0 signals provided by programming logic 116. Latch 13-12 stores an eight bit proximity word which defines the desired proximity of the words or sets being searched. Shift register 13-11 stores signals representing the relative position of the set or word selected by decoder 151. The bits stored in latch 13-12 indicate which positions within shift register 13-11 are of interest in the search strategy. For example, if it is desired to find word zero within two words of word seven (i.e., "undirected" proximity), programming logic 116 programs latch 13-2 to cause decoder 13-6 to select the $\overline{W0}$ signal, and decoder 13-7 to select the $\overline{W7}$ signal. Furthermore, programming logic 116 programs latch 13-12 to store 00000111, and latch 13-14 to store 00000111. Programming logic 116 programs latch 13-2 to cause decoder 13-3 to select the $\overline{EOW}$ signal as the CLK13-1 signal, thus causing the W0 and W7 signals selected by decoders 13-6 and 13-7, respectively, to be shifted into shift registers 13-11 and 13-13, respectively, on each $\overline{EOW}$ signal.

With the four most significant bits of latch 13-12 logical zeroes, NAND gates 13-19a through 13-19e are disabled, thereby providing logical one output signals regardless of the contents of the five most significant bits of shift registers 13-11. However, because the three least significant bits stored in latch 13-12 are logical ones, the output signals from NAND gates 13-19f through 13-19h are the logical inverse of the three least significant bits of shift register 13-11. Thus, if a logical one is stored in any of the three least significant bits of shift register 13-11, the output signal from the associated NAND gate 13-19f through 13-19h is a logical zero, thus causing NAND gate 13-23 to generate a logical one output signal. Thus, when both word zero and word seven appear within the last three words decoded (i.e., word zero is within two words of word 7), the output signal from NAND gates 13-23 and 13-24 are both logical ones, and thus the output signal from NAND gate 13-27a is a logical zero, indicating that word zero and word seven have been located within two words of each other.

In a similar manner, NAND gates 13-27b through 13-27h provide output signals based on the appropriate logical combinations of the output signals from NAND gates 13-23 through 13-26. Latch 13-5 also provides three address signals to decoder 13-28 (which comprises, for example, a 74151 device as manufactured by National) which in turn selects the output signals from one of NAND gates 13-27a through 13-27h to provide an interrupt signal on terminal 13-50. This interrupt signal is used to indicate to a central processing unit (not shown) that the text comparator of this invention has detected the occurrence of the desired words or sets of words defined by the search strategy, as defined by the output signal from the NAND gate 13-27a through 13-27h which has been selected by decoder 13-28.

In one embodiment of this invention, proximity logic 117 also includes latch 13-29, which comprises, for example a 74374 device as manufactured by National. Latch 13-29 stores the output signals provided by NAND gates 13-27a through 13-27h, and thereby allows the central processing unit (not shown) to determine the value of the signals provided by NAND gates 13-27a through 13-27h at any desired time. In one embodiment of this invention, one eight bit word representing the output signals from NAND gates 13-27a through 13-27h is stored in latch 13-29, and is made available to a central processing unit (not shown) on bus 111a.

Proximity logic 117 is also capable of detecting a so-called "directed" proximity of words or sets of words. In this event, the eight bit proximity word stored in latches 13-12, 13-14, 13-16, and 13-18 will contain only a single logical one bit, thereby causing proximity logic 117 to provide an output signal indicating when a first word or set is located within a precise proximity of a second selected word or set. Thus, for example, proximity logic 117 can be programmed to detect the occurrence of word zero in a location which is *exactly* n words after the occurrence of word seven, for example, where n is an integer ranging from −7 to +7. Thus, if it is desired to locate the occurrence of word 0 which is precisely four words after word 7, decoder 13-6 selects word 0, decoder 13-7 selects word 7, latch 13-12 stores 00000001, latch 13-13 stores 00010000, and decoder 13-28 selects the output signal from NAND gate 13-27a, thus providing an interrupt signal on output lead 13-50 when word 0 is located exactly four words after word 7.

Alternatively, if it is desired to locate the occurrence of word 0 which is precisely four words before word 7, decoder 13-6 selected word 0, decoder 13-7 selects word 7, latch 13-12 stores 00010000, latch 13-13 stores 00000001, and decoder 13-28 selects the output signal from NAND gate 13-27a, thus providing an interrupt signal on output lead 13-50 when word 0 is located exactly four words before word 7.

Furthermore, if it is desired to locate the occurrence of word 0 which is *within* four words before word 7 (i.e., word 0 is the first, second, third or fourth word before word 7), decoder 13-6 selects word 0, decoder 13-7 selects word 7, latch 13-12 stores 0011110, latch 13-13 stores 00000001, and decoder 13-28 selects the output signal from NAND gate 13-27a, thus providing an interrupt signal on output lead 13-50 when word 0 is located within four words before word 7.

It is also understood to one of ordinary skill in the art in light of the teachings of this specification, that proximity logic 117 can be constructed to detect the occurrence of greater combinations of words and sets, merely by expanding the number of latches, decoders, and shift registers, and logic gates 13-27a through 13-27h, in order to detect more complex search strategies.

While this specification has explained the operation of this invention in conjunction with several specific embodiments, it is to be understood that this specification is not to operate as a limitation on the scope of the invention. Many other embodiments of this invention will become apparent to those skilled in the art in light of the teachings of this invention.

# EP 0 099 404 B1

## TABLE 1

| Character | ASCII Code (binary) | ASCII Code (hexidecimal) | Character | ASCII Code (binary) | ASCII Code (hexidecimal) |
|---|---|---|---|---|---|
| blank | 00100000 | 20 | P | 01010000 | 50 |
| ! | 00100001 | 21 | Q | 01010001 | 51 |
| " | 00100010 | 22 | R | 01010010 | 52 |
| # | 00100011 | 23 | S | 01010011 | 53 |
| $ | 00100100 | 24 | T | 01010100 | 54 |
| % | 00100101 | 25 | U | 01010101 | 55 |
| & | 00100110 | 26 | V | 01010110 | 56 |
| ' | 00100111 | 27 | W | 01010111 | 57 |
| ( | 00101000 | 28 | X | 01011000 | 58 |
| ) | 00101001 | 29 | Y | 01011001 | 59 |
| * | 00101010 | 2A | Z | 01011010 | 5A |
| + | 00101011 | 2B | [ | 01011011 | 5B |
| , | 00101100 | 2C | \ | 01011100 | 5C |
| - | 00101101 | 2D | ] | 01011101 | 5D |
| . | 00101110 | 2E | ⌐ or Λ | 01011110 | 5E |
| / | 00101111 | 2F | — | 01011111 | 5F |
| 0 | 00110000 | 30 | ` | 01100000 | 60 |
| 1 | 00110001 | 31 | a | 01100001 | 61 |
| 2 | 00110010 | 32 | b | 01100010 | 62 |
| 3 | 00110011 | 33 | c | 01100011 | 63 |
| 4 | 00110100 | 34 | d | 01100100 | 64 |
| 5 | 00110101 | 35 | e | 01100101 | 65 |
| 6 | 00110110 | 36 | f | 01100110 | 66 |
| 7 | 00110111 | 37 | g | 01100111 | 67 |
| 8 | 00111000 | 38 | h | 01101000 | 68 |
| 9 | 00111001 | 39 | i | 01101001 | 69 |
| : | 00111010 | 3A | j | 01101010 | 6A |
| ; | 00111011 | 3B | k | 01101011 | 6B |
| < | 00111100 | 3C | l | 01101100 | 6C |
| = | 00111101 | 3D | m | 01101101 | 6D |
| > | 00111110 | 3E | n | 01101110 | 6E |
| ? | 00111111 | 3F | o | 01101111 | 6F |
| @ | 01000000 | 40 | p | 01110000 | 70 |
| A | 01000001 | 41 | q | 01110001 | 71 |
| B | 01000010 | 42 | r | 01110010 | 72 |
| C | 01000011 | 43 | s | 01110011 | 73 |
| D | 01000100 | 44 | t | 01110100 | 74 |
| E | 01000101 | 45 | u | 01110101 | 75 |
| F | 01000110 | 46 | v | 01110110 | 76 |
| G | 01000111 | 47 | w | 01110111 | 77 |
| H | 01001000 | 48 | x | 01111000 | 78 |
| I | 01001001 | 49 | y | 01111001 | 79 |
| J | 01001010 | 4A | z | 01111010 | 7A |
| K | 01001011 | 4B | { | 01111011 | 7B |
| L | 01001100 | 4C | ¦ | 01111100 | 7C |
| M | 01001101 | 4D | } | 01111101 | 7D |
| N | 01001110 | 4E | ~ | 01111110 | 7E |
| O | 01001111 | 4F | DEL | 01111111 | 7F |

## Claims

1. A textual comparison system for locating a desired character string within textual material formed from a predefined sequence of characters including means for sequentially receiving stored textual characters and means for sequentially decoding said stored textual characters as they are received, thereby providing a sequence of decoded characters, characterized by:

means for storing said decoded characters and information as to the relative positioning of said decoded characters within said predefined sequence of characters;

means for comparing said decoded characters and said information as to the relative positioning of

15

said decoded characters with information defining said desired character string, whereby the presence of said desired character string is determined; and

means responsive to said means for comparing for providing a signal indicating that said desired character string has been located;

and said means for decoding including means for being programmed to detect only characters forming a part of said desired character string.

2. The system of Claim 1 further characterized in that said means for decoding includes a plurality of programmable latches for storing information defining said desired character string to be detected, means for comparing said received character with the information stored in said plurality of programmable latches, and means for providing an output signal indicating when the characters being received from said desired character string.

3. A system as in Claim 1 which is further characterized by comprising a structure for detecting the presence of a plurality of delimiters within textual material formed by a predefined sequence of characters, comprising:

means for sequentially receiving a plurality of stored characters;

means for receiving a plurality of signals defining characters associated with said plurality delimiters to be detected;

means for providing in response to the receipt of each of said plurality of stored characters, a selected one of a plurality of character output signals each uniquely associated with one of said plurality of textual characters; and

means for comparing the relative positions of said plurality of character output signals, thereby providing an output signal corresponding to the detected delimiter when said relative positions of said plurality of character output signals defines one of said delimiters.

4. Structure as in Claim 3 further characterized in that said plurality of delimiters are selected from a group of delimiters consisting of END of WORD, END of SENTENCE, END of PARAGRAPH, END of CHAPTER, END of TITLE, and END OF DOCUMENT.

5. Structure as in Claim 4 further characterized in that an END of WORD delimiter is defined by the presence of a nonblank character followed by a blank character.

6. Structure as in Claim 4 further characterized in that an END of SENTENCE delimiter is defined by the presence of a period followed by two blank characters.

7. Structure as in Claim 4 further characterized in that an END of PARAGRAPH delimiter is defined by the presence of a period followed by three blank characters.

8. A system as in Claim 1, which is further characterized by comprising set logic for combining a plurality of word signals indicating predefined words have been located between pairs of a predefined delimiter signal comprising:

means for receiving said plurality of word signals;

means for storing said plurality of word signals;

means for receiving a plurality of delimiter signals;

means for storing information defining which of said plurality of delimiter signals is said predefined delimiter signal;

means for resetting said means for storing said plurality of word signals in response to said predefined delimiter signal;

means for combining in a logical operation said word signals stored within said means for storing said plurality of word signals and providing a SET output signal; and

means for masking from said means for combining selected output signals from said means for storing said plurality of word signals so as to cause these signal to have no effect on said SET output signal.

9. A system as in Claim 1, which is further characterized by comprising set combination logic for combining a plurality of SET signals indicating when desired sets of characters have been detected, comprising:

means for receiving a plurality of SET signals;

means for storing said plurality of SET signals;

means for combining in a logical operation said SET signals stored within said means for storing said plurality of SET signals and providing a SET combination output signal;

means for masking from application to said means for combining selected ones of said plurality of SET signals, thereby causing said selected ones of said plurality of SET signals from having no effect on said SET combination output signal.

10. A system as in Claim 1, which is further characterized by comprising proximity logic for detecting when a first selected word or set of words is located within a selected proximity of n delimiter characters from a second selected word or set of words, comprising:

means for receiving a plurality of signals indicating when selected words or sets of words have been detected from within textual material formed from a predefined sequence of characters;

means for selecting from said plurality of signals a first selected signal and a second selected signal;

means for receiving a delimiter character;

means for storing the relative positions of the characters within said textual material defined by said first and second selected signals and providing relative position signals;

means for storing masking information;

means for combining signals indicating the relative position of said first and second selected signals;

means for masking selected ones of said relative position signals in response to said masking information; and

means for providing an output signal when said first and second selected word is located within said selected proximity.

11. Structure as in Claim 10 further characterized in that said proximity logic further comprises:

means for receiving a plurality of types of delimiter signals; and

means for storing information indicating which of said plurality of types of delimiter signals are of interest.

**Patentansprüche**

1. Textvergleichssystem zum Lokalisieren eines gewünschten Zeichenstrings innerhalb textartigen Materials, wobei der Zeichenstring aus einer vorbestimmten Zeichensequenz gebildet ist, mit Mitteln zum sequentiellen Empfangen von gespeicherten Textzeichen und Mitteln zum sequentiellen Dekodieren der gespeicherten Textzeichen, wie sie empfangen werden, wodurch eine Sequenz dekodierter Zeichen erhalten wird, gekennzeichnet durch:

Mittel zum Speichern der dekodierten Zeichen und zum Speichern von Informationen betreffend die relative Anordnung der dekodierten Zeichen innerhalb der vorbestimmten Zeichensequenz;

Mittel zum Vergleichen der dekodierten Zeichen und der Informationen betreffend die relative Anordnung der dekodierten Zeichen mit Informationen, welche den gewünschten Zeichenstring definieren, wodurch die Anwesenheit des gewünschten Zeichenstrings festgestellt wird; und

Mittel, die in Abhängigkeit von den Mitteln zum Vergleichen ein Signal abgeben, welches anzeigt, daß der gewünschte Zeichenstring lokalisiert worden ist;

wobei die Mittel zum Dekodieren Mittel umfassen, welche so zu programmieren sind, daß sie nur solche Zeichen erfassen, welche einen Teil des gewünschten Zeichenstrings darstellen.

2. System nach Anspruch 1, ferner dadurch gekennzeichnet, daß die Mittel zum Dekodieren beinhalten: eine Vielzahl programmierbarer Pufferspeicher zum Speichern von Informationen, welche den gewünschten zu erfassenden Zeichenstring definieren, Mittel zum Vergleichen des empfangenen Zeichens mit den in der Vielzahl programmierbarer Pufferspeicher gespeicherten Informationen und Mittel zum Abgeben eines Ausgangssignals, das anzeigt, wann die Zeichen des gewünschten Zeichenstrings empfangen werden.

3. System nach Anspruch 1, ferner dadurch gekennzeichnet, daß es eine Anordnung umfaßt, welche die Anwesenheit eine Vielzahl Begrenzer innerhalb des textartigen Materials erfaßt, die von einer vorbestimmten Zeichensequenz gebildet sind, wobei die Anordnung umfaßt:

Mittel zum sequentiellen Empfangen einer Vielzahl gespeicherter Zeichen;

Mittel zum Empfangen einer Vielzahl Signale, welche Zeichen definieren, die der Vielzahl der zu erfassenden Begrenzer zugeordnet sind;

Mittel zum Abgeben eines ausgewählten einer Vielzahl Zeichenabgabesignale, die jeweils eindeutig einem der Vielzahl Textzeichen zugeordnet sind, und zwar auf den Empfang eines jeden der Vielzahl gespeicherter Zeichen hin; und

Mittel zum Vergleichen der relativen Lagen der Vielzahl Zeichenabgabesignale, wobei ein Ausgangssignal abgegeben wird, das dem erfaßten Begrenzer entspricht, wenn die relativen Lagen der Vielzahl Zeichenabgabesignale einen der Begrenzer definieren.

4. Anordnung nach Anspruch 3, die ferner dadurch gekennzeichnet ist, daß die Vielzahl Begrenzer aus einer Gruppe Begrenzer ausgewählt ist, die umfaßt: ENDE des WORTES, ENDE des SATZES, ENDE des ABSATZES, ENDE des KAPITELS, ENDE des TITELS und ENDE des DOKUMENTES.

5. Anordnung nach Anspruch 4, ferner dadurch gekennzeichnet, daß eine "ENDE des WORTES"-Begrenzer durch das Auftreten eines Nicht-Leerzeichens, gefolgt von einem Leerzeichen definiert ist.

6. Anordnung nach Anspruch 4, ferner dadurch gekennzeichnet, daß ein "ENDE des SATZES"-Begrenzer durch das Auftreten eines Punktes, gefolgt von zwei Leerzeichen definiert ist.

7. Anordnung nach Anspruch 4, ferner dadurch gekennzeichnet, daß ein "ENDE des ABSATZES"-Begrenzer durch das Auftreten eines Punktes, gefolgt von drei Leerzeichen definiert ist.

8. System nach Anspruch 1, ferner dadurch gekennzeichnet, daß es eine Satzlogik beinhaltet zum Kombinieren einer Vielzahl Wortsignale, welche vorbestimmte Worte anzeigen, die zwischen Paaren vorbestimmter Begrenzersignale auftreten, wobei die Satzlogik umfaßt:

Mittel zum Empfangen der Vielzahl Wortsignale;

Mittel zum Speichern der Vielzahl Wortsignale;

Mittel zum Empfangen einer Vielzahl Begrenzersignale;

Mittel zum Speichern von Informationen, welche festlegen, welches der Vielzahl Begrenzersignale das vorbestimmte Begrenzersignal ist;

Mittel zum Zurücksetzen der Mittel zum Speichern der Vielzahl Wortsignale auf das vorbestimmte Begrenzersignal hin;

Mittel zum Kombinieren derjenigen Wortsignale, die in den Mitteln zum Speichern der Vielzahl Wortsignale gespeichert sind, durch eine logische Verarbeitung und zum Abgeben eines SATZ-Ausgangssignales; und

Mittel zum Maskieren ausgewählter Ausgangssignale der Mittel zum Speichern der Vielzahl Wortsignale, von den Mitteln zum Kombinieren, damit die Signale keinen Einfluss auf das SATZ-Ausgangssignal haben.

9. System nach Anspruch 1, das ferner dadurch gekennzeichnet ist, daß es eine Satzkombinationslogik zum Kombinieren einer Vielzahl SATZ-Signale aufweist, die anzeigen, wenn gewünschte Zeichensätze erfaßt worden sind, wobei die Satzkombinationslogik umfaßt:

Mittel zum Empfangen einer Vielzahl SATZ-Signale;

Mittel zum Speichern der Vielzahl SATZ-Signale;

Mittel zum Kombinieren der SATZ-Signale, welche in den Mitteln zum Speichern der Vielzahl SATZ-Signale gespeichert sind, durch eine logische Verarbeitung, und zum Abgeben eines SATZ-Kombinationsausgangssignals;

Mittel zum Maskieren ausgewählter der Vielzahl SATZ-Signale von Zuführ zu den Mitteln zum Kombinieren damit die ausgewählten der Vielzahl SATZ-Signale keinen Einfluss auf das SATZ-Kombinationsausgangssignal haben.

10. System nach Anspruch 1, das ferner dadurch gekennzeichnet ist, daß es eine Umgebungs-Logik aufweist, um zu erfassen, wenn sich ein erstes ausgewähltes Wort oder ein Satz Wörter innerhlab einer ausgewählten Umgebung von n Begrenzerzeichen bezüglich eines zweiten ausgewählten Wortes oder Satzes Wörter befindet, wobei die Umgebungs-Logik umfaßt:

Mittel zum Empfangen einer Vielzahl Signale, die anzeigen, wenn ausgewählte Wörter oder Sätze Wörter innerhalb textartigen Materials erfasst worden sind, die aus einer vorbestimmten Zeichensequenz gebildet sind;

Mittel zum Auswählen eines ersten ausgewählten Signales und eines zweiten ausgewählten Signales aus der Vielzahl Signale;

Mittel zum Empfangen eines Begrenzerzeichens;

Mittel zum Speichern der Relativlagen derjenigen Zeichen innerhalb des textartigen Materials, die von dem ersten und dem zweiten Signal definiert werden, und zum Abgeben von Relativlagesignalen;

Mittel zum Speichern von Maskierinformationen;

Mittel zum Kombinieren von Signalen, welche die Relativlagen des ersten und des zweiten ausgewählten Signales anzeigen;

Mittel zum Maskieren ausgewählter der Relativlagensignale in Abhängigkeit von den Maskierinformationen; und

Mittel zum Abgeben eines Ausgangssignales, wenn das erste und das zweite ausgewählte Wort innerhalb der ausgewählten Umgebung liegen.

11. Anordnung nach Anspruch 10, ferner dadurch gekennzeichnet, daß die Umgebungs-Logik ferner umfaßt:

Mittel zum Empfangen einer Vielzahl von Begrenzersignaltypen; und

Mittel zum Speichern von Informationen, die anzeigen, welche der Vielzahl von Begrenzersignaltypen von Interesse sind.

**Revendications**

1. Système de comparaison textuelle pour localiser une chaîne de caractères désirée dans des informations textuelles, formée d'une suite prédéfinie de caractères, comportant des moyens pour recevoir séquentiellement des caractères textuels mémorisés, et des moyens pour décoder séquentiellement ces caractères textuels mémorisés au fur et à mesure qu'ils sont reçus, en fournissant ainsi une suite de caractères décodés, caractérisé en ce qu'il comprend:

des moyens pour mémoriser les caractères décodés et une information quant à la position relative de ces caractères décodés dans la suite prédéfinie de caractères;

des moyens pour comparer les caractères décodés et l'information quant à la position relative des caractères décodés à une information définissant la chaîne de caractères désirée, ce qui détermine la présence de cette chaîne de caractères désirée; et

des moyens sensibles aux moyens pour comparer pour fournir un signal indiquant que la chaîne de caractères désirée a été localisée,

les moyens pour décoder comportant des moyens pour être programmés pour détecter uniquement les caractères faisant partie de la chaîne de caractères désirée.

2. Système de comparaison selon la revendication 1, caractérisé en outre en ce que les moyens pour décoder comportent une pluralité de circuits à verrouillage programmables pour mémoriser des informations définissant la chaîne de caractères désirée à détecter, des moyens pour comparer le caractère reçu aux informations mémorisées dans la pluralité de circuits à verrouillage programmables, et des moyens pour fournir un signal de sortie indiquant quand les caractères de la chaîne de caractères désirée sont reçus.

3. Système de comparaison selon la revendication 1, caractérisé en outre en ce qu'il comprend une structure pour détecter la présence d'une pluralité de délimiteurs dans les informations textuelles, formés

EP 0 099 404 B1

par une suite prédéfinie de caractères, comprenant:

des moyens pour recevoir séquentiellement une pluralité de caractères mémorisés;

des moyens pour recevoir une pluralité de signaux définissant des caractères associés à la pluralité de délimiteurs à détecter;

des moyens pour fournir, en réponse à la réception de chacun des caractères de la pluralité de caractères mémorisés, un signal sélectionné dans une pluralité de signaux de sortie de caractère associés chacun uniquement à un caractère de la pluralité de caractères textuels; et

des moyens pour comparer les positions relatives de la pluralité de signaux de sortie de caractère, en fournissant ainsi un signal de sortie correspondant au délimiteur détecté lorsque les positions relatives de la pluralité de signaux de sortie de caractère définit un des délimiteurs.

4. Structure selon la revendication 3, caractérisée en outre en ce que la pluralité de délimiteurs est sélectionnée dans un groupe de délimiteurs composé de FIN de MOT, FIN de PHRASE, FIN de PARAGRAPHE, FIN de CHAPITRE, FIN de TITRE, et FIN de DOCUMENT.

5. Structure selon la revendication 4, caractérisée en outre en ce qu'un délimiteur FIN de MOT est défini par la présence d'un caractère autre qu'un blank suivi d'un caractère représentant un blanc.

6. Structure selon la revendication 4, caractérisée en outre en ce qu'un délimiteur FIN de PHRASE est défini par la présence d'un point suivi de deux caractères représentant un blanc.

7. Structure selon la revendication 4, caractérisé en outre en ce qu'un délimiteur FIN de PARAGRAPHE est défini par la présence d'un point suivi de trois caractères représentant un blanc.

8. Système de comparaison selon la revendication 1, caractérisé en outre en ce qu'il comprend une logique d'ensembles pour combiner une pluralité de signaux de mot indiquant que des mots prédéfinis ont été localisés entre des paires d'un signal de délimiteur prédéfini, comprenant:

des moyens pour recevoir la pluralité de signaux de mot;

des moyens pour mémoriser la pluralité de signaux de mot;

des moyens pour recevoir une pluralité de signaux de délimiteur;

des moyens pour mémoriser une information définissant lequel signal de la pluralité de signaux de délimiteur est le signal de délimiteur prédéfini;

des moyens pour remettre à zéro les moyens pour mémoriser la pluralité de signaux de mot en réponse au signal de délimiteur prédéfini;

des moyens pour combiner dans une opération logique les signaux de mot mémorisés dans les moyens pour mémoriser la pluralité de signaux de mot, et pour fournir un signal de sortie ENSEMBLE; et

des moyens pour masquer vis-à-vis des moyens pour combiner, des signaux de sortie sélectionnés des moyens pour mémoriser la pluralité de signaux de mot, de manière à faire que ces signaux n'aient pas d'effet sur le signal de sortie ENSEMBLE.

9. Système de comparaison selon la revendication 1, caractérisé en outre en ce qu'il comprend une logique de combinaison d'ensembles pour combiner une pluralité de signaux ENSEMBLE indiquant que des ensembles de caractéres désirés ont été détectés, comprenant:

des moyens pour recevoir sélectivement une pluralité de signaux ENSEMBLE;

des moyens pour mémoriser la pluralité de signaux ENSEMBLE;

des moyens pour combiner dans une opération logique les signaux ENSEMBLE mémorisés dans les moyens pour mémoriser la pluralité de signaux ENSEMBLE et fournir un signal de sortie de combinaison de ENSEMBLE;

des moyens pour masquer de l'application aux moyens pour combiner, des signaux sélectionnés de la pluralité de signaux ENSEMBLE, ce qui fait que les signaux sélectionnés de la pluralité de signaux ENSEMBLE n'ont pas d'effet sur le signal de sortie de combinaison de ENSEMBLE.

10. Système de comparaison selon la revendication 1, caractérisé en outre en ce qu'il comprend une logique de proximité pour détecter lorsqu'un premier mot ou ensemble de mots sélectionné est situé dans les limites d'une proximité sélectionnée de n caractères délimiteurs d'un deuxième mot ou ensemble de mots sélectionné, comprenant:

des moyens pour recevoir une pluralité de signaux indiquant quand des mots ou ensemble de mots sélectionnés ont été détectés dans les informations textuelles formées par une suite prédéfinie de caractères;

des moyens pour sélectionner dans la pluralité de signaux un premier signal sélectionné et un deuxième signal sélectionné;

des moyens pour recevoir un caractère délimiteur;

des moyens pour mémoriser les positions relatives des caractères dans les informations textuelles définies par les premier et deuxième signaux sélectionnés, et pour fournir des signaux de position relative;

des moyens pour mémoriser une information de masquage;

des moyens pour combiner des signaux indiquant la position relative des premier et deuxième signaux sélectionnés;

des moyens pour masquer des signaux sélectionnés parmi les signaux de position relative en réponse à l'information de masquage; et

des moyens pour fournir un signal de sortie lorsque les premier et deuxième mots sélectionnés sont situés dans les limites de la proximité sélectionnée.

19

11. Structure selon la revendication 10, caractérisée en outre en ce que la logique de proximité comprend en outre:

des moyens pour recevoir une pluralité de types de signaux de délimiteur; et

des moyens pour mémoriser une information indiquant lesquels types de la pluralité de types de signaux de délimiteurs ont importance.

FIG. 1

| FIG. 2a |
|---|
| FIG. 2b |
| FIG. 2c |

FIG. 2

| FIG. 4a |
|---|
| FIG. 4b |

FIG. 4

| FIG. 6a | FIG. 6b | FIG. 6c |
|---|---|---|

FIG. 6

| FIG. 3a |
|---|
| FIG. 3b |
| FIG. 3c |
| FIG. 3d |

FIG. 3

| FIG. 5a | FIG. 5b | FIG. 5c | FIG. 5d |
|---|---|---|---|

FIG. 5

FIG. 2a

FIG. 2b

FIG. 2c

FIG. 3a

EP 0 099 404 B1

FIG. 3b

FIG. 3c

FIG. 3d

FIG. 4a

FIG. 4b

FIG. 5a

FIG. 5b

FIG. 5c

FIG. 5d

FIG. 6a

EP 0 099 404 B1

FIG. 6b

17

FIG. 6c